# EUROPEAN PATENT SPECIFICATION

(11) **EP 4 168 494 B1**
(45) Date of publication and mention of the grant of the patent: **03.06.2026**
(21) Application number: 21735195.6
(22) Date of filing: 16.06.2021
(51) Int. Cl.: C09C 1/02

(54) **CALCIUM CARBONATE-CONTAINING MATERIAL**
CALCIUMCARBONAT-ENTHALTENDES MATERIAL
MATÉRIAU CONTENANT DU CARBONATE DE CALCIUM

(30) Priority: 17.06.2020 PT 2020129793
(43) Date of publication of application: 26.04.2023
(73) Proprietor: OMYA S.A., 3130-551 Soure (PT)
(72) Inventor: PEDROSO, Luis, 3040-557 Antanhol (PT); CURADO, Carolina, 3130-121 Samuel (PT); FREIRE VIEIRA, Maria Teresa, 3030-069 Coimbra (PT); GOMES DE OLIVEIRA MANAIA, Ana Teresa, 3150-195 Condeixa-A-Nova (PT); FREIRE DUARTE, João Pedro, 3040-020 Coimbra (PT)
(74) Representative: Maiwald GmbH
(86) International application number: PCT/EP2021/066223
(87) International publication number: WO 2021/255083

(56) References cited:
- EP-A1- 2 447 213
- GAURANG GOLAKYA: "EXTRACTION OF CALCIUM CARBONATE FROM WASTE EGGSHELLS AS FILLERS IN COMPOSITES", 29 January 2020 (2020-01-29), pages 1 - 106, XP55847339, Retrieved from the Internet <URL:https://harvest.usask.ca/bitstream/handle/10388/12568/GOLAKIYA-THESIS-2020.pdf?sequence=1&isAllowed=y>
- OLIVEIRA D A ET AL: "A literature review on adding value to solid residues: egg shells", JOURNAL OF CLEANER PRODUCTION, ELSEVIER, AMSTERDAM, NL, vol. 46, 11 October 2012 (2012-10-11), pages 42 - 47, XP028593324, ISSN: 0959-6526, DOI: 10.1016/J.JCLEPRO.2012.09.045
- GAURANG GOLAKYA: "EXTRACTION OF CALCIUM CARBONATE FROM WASTE EGGSHELLS AS FILLERS IN COMPOSITES", 29 January 2020 (2020-01-29), pages 1 - 106, XP055847339, Retrieved from the Internet <URL:https://harvest.usask.ca/bitstream/handle/10388/12568/GOLAKIYA-THESIS-2020.pdf?sequence=1&isAllowed=y>
- YOO S ET AL: "Utilization of calcium carbonate particles from eggshell waste as coating pigments for ink-jet printing paper", BIORESOURCE TECHNOLOGY, ELSEVIER, AMSTERDAM, NL, vol. 100, no. 24, 1 December 2009 (2009-12-01), pages 6416 - 6421, XP026520490, ISSN: 0960-8524, [retrieved on 20090807], DOI: 10.1016/J.BIORTECH.2009.06.112

## Description

The present invention refers to a calcium carbonate-containing material, a process for preparing a calcium carbonate-containing material, a paint formulation comprising the calcium carbonate-containing material, and the use of the calcium carbonate-containing material in a paint formulation.

Titanium dioxide (TiO₂) is widely used in the paint industry as a white pigment due to its high refractive index and high brightness. Titanium dioxide does not occur naturally in a sufficient purity to be used directly in paint applications. Therefore, titanium dioxide-containing minerals and/or ore are usually further processed by large scale industrial processes like the so-called sulphate process or the chloride process. The price of the raw materials, processing equipment, energy etc. makes titanium dioxide a relatively expensive pigment with a comparatively high carbon dioxide foot print.

To reduce the high cost imposed by titanium dioxide, a part of titanium dioxide is generally substituted by some other industrial extenders, mineral fillers and/or pigments such as calcite or calcined kaolin. However, this substitution often negatively affects the quality of paints in terms of stability, coverage (opacity), brightness (gloss), scrub resistance (film toughness), etc.

EP2447213A1 relates to a process for the preparation of precipitated calcium carbonate comprising the steps of a) providing and calcining calcium carbonate comprising material; b) slaking the reaction product obtained from step a) with an aqueous ammonium chloride solution; c) separating insoluble components from the calcium chloride solution obtained from step b); d) carbonating the calcium chloride solution obtained from step c); e) separating the precipitated calcium carbonate obtained from step d). D.A. Oliveira et al, Journal of Cleaner Production 46 (2013) 42-37, relates to a literature review on adding value to solid residues: egg shells. A thesis by G. Golakiya, University of Saskatchewan, relates to extraction of calcium carbonate from waste eggshells as fillers in composites. S. Yoo et al, Bioresource Technology 100 (2009) 6416-6421, relates to utilization of calcium carbonate particles from eggshell waste as coating pigments for ink-jet printing paper. CA728606A refers to a product from egg-shells.

There is a continuing demand for new extenders, mineral fillers and/or pigments in the field of paint applications. In particular, there is a demand for new extenders, mineral fillers and/or pigments, which show improved properties compared to materials already known in the prior art. It is further desirable that newly developed extenders, mineral fillers and/or pigments may be used for substituting costlier raw materials, for example, titanium dioxide. It is particularly desirable that the use of the newly developed extenders, mineral fillers and/or pigments as substituents improve, or at least do not negatively affect, the overall performance of paints. Ideally, new extenders, mineral fillers and/or pigments should be based on a raw material, which has a relatively small carbon dioxide footprint and/or is derived from recycled material, preferably of biological origin.

Therefore, it is one object of the present invention to provide a new extender, filler and/or pigment for paint applications. Another object of the present invention is to provide a new extender, filler and/or pigment with improved properties such as optical properties. Another object of the present invention is to provide a new material for paint applications, which is useful for substituting costly, toxic and/or rare raw materials. Yet another object of the present invention is to provide a substituent for known extenders, fillers and/or pigments used in paints, which does not compromise the performance of a paint. It is yet another object of the present invention to provide an extender, filler and/or pigment, which may be produced from recycled material, and/or which may be produced using less energy and/or other resources compared to conventional materials for such application.

One and more of the foregoing objects is achieved by the subject-matter as defined in independent claim 1, 7 and 12.

According to one aspect of the present invention, a calcium carbonate-containing material is provided,
wherein the calcium carbonate-containing material is prepared from an eggshell,
wherein the calcium carbonate-containing material has a weight-median particle size *d*₅₀ of from 0.5 to 10 µm, and/or a weight top cut particle size *d*₉₈ of from 2.0 to 50 µm,
wherein the calcium carbonate-containing material comprises organic matter in an amount of below 1.5 wt.%, based on the total dry weight of the calcium carbonate-containing material, and wherein the calcium carbonate-containing material has
   i) a brightness from 90 to 100%, according to R457, and/or
   ii) L* from 95 to 100, according to DIN 6174.

The inventors surprisingly found that calcium carbonate according to the invention has advantageous characteristics compared to other calcium carbonate-containing materials. For example, it has been found that the inventive calcium carbonate-containing material can be used for improving the optical properties such as the opacity and/or coverage of a paint formulation compared to a paint formulation comprising known calcium carbonate products such as commercially available ground calcium carbonates. It has further been found by the inventors that the inventive product allows for substituting conventional extenders and/or pigments such as ground calcium carbonate and/or titanium dioxide in a paint without compromising the overall optical performance of the paint. For example, the inventors surprisingly found that the titanium dioxide content of a commercial paint formulation can be reduced, if the product of the present invention is used as a raw material in the paint. The inventors also surprisingly found that the titanium dioxide content of a commercial paint formulation can be reduced, if a conventional extender and/or pigment, like ground calcium carbonate, is substituted by the product of the present invention. Furthermore, the inventive product is compatible with other paint additives commonly used in the art. In addition to the foregoing advantages, the inventive product is based on a recycled biological material, and, therefore, has a relatively small carbon dioxide footprint compared to other extenders and/or pigments used for paint applications.

According to another aspect of the present invention, a process for preparing a calcium carbonate-containing material according to the present invention is provided, the process comprising the steps of:
a) providing a pre-treated avian eggshell, wherein the pre-treated avian eggshell is an avian eggshell in which the inner shell membrane has been removed,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm,
c) treating the pre-treated avian eggshell during step b) with a base or treating the ground avian eggshell after step b) with a base,
d) optionally separating the ground avian eggshell from the aqueous suspension obtained in step b) or c),
e) treating the ground avian eggshell obtained in step c), or in optional step d), with a bleaching agent.

According to yet another aspect of the present invention, a paint formulation is provided comprising the calcium carbonate-containing material according to the invention.

According to yet another aspect of the present invention, the use of a calcium carbonate-containing material according to the invention in a paint formulation is provided.

Advantageous embodiments of the present invention are defined in the dependent claims.

According to one embodiment of the present invention, the calcium carbonate-containing material has a weight-median particle size *d*₅₀ of from 1.0 to 7 µm, and preferably from 2.5 to 5 µm, and/or
the calcium carbonate-containing material has a weight top cut particle size d₉₈ of from 5.0 to 35 µm, and preferably from 10 to 25 µm, and/or
the calcium carbonate-containing material has a specific surface area of from 0.5 to 20 m²/g, preferably of from 1 to 15 m²/g, and more preferably of from 2 to 10 m²/g, measured using nitrogen and the BET method.

According to one embodiment of the present invention, the calcium carbonate-containing material has
i) a brightness from 93 to 100%, according to R457, and/or
ii) L* from 98 to 100, according to DIN 6174, and/or
iii) b* from 0 to 10, preferably from 1 to 5, according to DIN 6174, and/or
iv) y from 0.5 to 5.

According to one embodiment of the present invention, the calcium carbonate-containing material comprises organic matter in an amount of below 1.0 wt.%, preferably of below 0.5 wt.%, more preferably of below 0.1 wt.%, even more preferably of below 0.05 wt.%, based on the total dry weight of the calcium carbonate-containing material, and/or
the calcium carbonate-containing material comprises calcium carbonate in an amount of from 96.0 to 99.9 wt.%, preferably from 97.0 to 99.0 wt.%, based on the total dry weight of the calcium carbonate-containing material.

According to one embodiment of the present invention, the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy.

According to one embodiment of the present invention, the calcium carbonate-containing material is prepared from chicken eggshell.

According to one embodiment of the present invention, the pre-treated avian eggshell of step a) is a pre-treated eggshell of a chicken and/or
the base of step c) is a base selected from the group consisting of hydroxide salts, ammonia, PO₄³⁻ salts, CO₃²⁻ salts and mixtures thereof, preferably selected from the group consisting of hydroxide salts and mixtures thereof, and most preferably is sodium hydroxide.

According to one embodiment of the present invention, the pre-treated avian eggshell is treated with the base during step b), and/or
the process comprises step d) and the ground avian eggshell obtained in step d) is treated with a bleaching agent in step e).

According to one embodiment of the present invention, the grinding of step b) is carried out in the presence of a grinding medium, preferably selected from the group consisting of metallic grinding media and non-metallic grinding media, preferably ceramic grinding media, and/or
the grinding of step b) is carried out in a ball mill, an attrition mill or a sand mill, preferably a sand mill.

According to one embodiment of the present invention, the bleaching agent in step d) is an oxidative bleaching agent, preferably selected from the group consisting of percarbonate salts, perborate salts, peroxy acids, hydrogen peroxide, hypochlorite salts and mixtures thereof, more preferably from the group consisting of hypochlorite salts and mixtures thereof, and most preferably is sodium hypochlorite, and/or
the treatment of step e) is carried out at a temperature in the range of from 10 to 90°C, preferably from 20 to 80°C, and more preferably from 50 to 75°C.

According to one embodiment of the present invention, the calcium carbonate-containing material obtained in step e) has a weight-median particle size *d*₅₀ of from 0.5 to 10 µm, preferably from 1.0 to 7 µm, and more preferably from 2.5 to 5 µm, and/or
the calcium carbonate-containing material obtained in step e) has a weight top cut particle size *d*₉₈ of from 2.0 to 35 µm, preferably from 5.0 to 30 µm, and more preferably from 10 to 25 µm, and/or
the calcium carbonate-containing material obtained in step e) has a specific surface area of from 0.5 to 20 m²/g, preferably of from 1 to 15 m²/g, and more preferably of from 2 to 10 m²/g, measured using nitrogen and the BET method.

According to one embodiment of the present invention, the calcium carbonate-containing material is used for improving the optical properties of a paint formulation, more preferably for increasing the opacity and/or coverage of a paint.

According to one embodiment of the present invention, the calcium carbonate-containing material is used for at least partially replacing a raw material in a paint formulation, preferably a filler and/or pigment, more preferably ground calcium carbonate (GCC) or titanium dioxide.

It should be understood that for the purposes of the present invention, the following terms have the following meanings:
A "calcium carbonate-containing material" in the meaning of the present invention is a material, which contains at least 90.0 wt.%, preferably at least 92.5 wt.%, more preferably at least 95.0 wt.%, of calcium carbonate, based on the total weight of the calcium carbonate-containing material.

An "avian eggshell" in the meaning of the present invention refers to the outer covering of a bird egg, which comprises a mineral shell with an inner shell membrane and an outer shell membrane on the inside of the mineral shell and a cuticle on the outside of the mineral shell.

A "pre-treated" avian eggshell in the meaning of the present invention refers to an avian eggshell, in which the inner shell membrane has been removed.

A "bleaching agent" in the meaning of the present invention refers to a chemical compound, which has the effect of reducing the colour and/or whiten a material as well as an antimicrobial effect, for example, based on its high reactivity towards organic materials.

An "oxidative" bleaching agent in the meaning of the present invention is a bleaching agent, which has the ability to accept electrons from another compound.

A "chicken egg" in the meaning of the present invention is an egg of a chicken hen (*Gallus gallus domesticus*)*.*

The "particle size" of particulate materials, for example the calcium carbonate-containing material described herein, is described by its distribution of particle sizes *dₓ.* Therein, the value *dₓ* represents the diameter relative to which x % by weight of the particles have diameters less than *dₓ*. This means that, for example, the *d*₂₀ value is the particle size at which 20 wt.-% of all particles are smaller than that particle size. The *d*₅₀ value is thus the weight median particle size, i.e. 50 wt.-% of all grains are bigger and the remaining 50 wt.-% are smaller than this particle size. The *d*₉₀ value is the particle size at which 90 wt.-% of all particles are smaller than that particle size. For the purpose of the present invention the particle size is specified as weight-median particle size *d*₅₀ unless indicated otherwise. The *d*₉₈ value is the particle size at which 98 wt.-% of all particles are smaller than that particle size. The *d*₉₈ value is also designated as "top cut". For the purpose of the present invention the particle size is specified as weight top cut *d*₉₈ unless indicated otherwise. Particle sizes were determined by using a Sedigraph^{™}5100 or 5120 instrument of Micromeritics Instrument Corporation. The method and the instrument are known to the skilled person and are commonly used to determine the particle size of fillers and pigments. The measurements were carried out in an aqueous solution of 0.1 wt.-% Na₄P₂O₇. The samples were dispersed using a high speed stirrer and sonicated.

The "specific surface area" (expressed in m²/g) of a material as used throughout the present document can be determined by the Brunauer Emmett Teller (BET) method with nitrogen as adsorbing gas and by use of a TriStar 3000 ASAP 2460 instrument from Micromeritics. The method is well known to the skilled person and defined in ISO 9277:2010. Prior to such measurements, the sample was filtered within a Büchner funnel, rinsed with deionised water and dried at 110°C in an oven for at least 12 hours. The total surface area (in m²) of said material can be obtained by multiplication of the specific surface area (in m²/g) and the mass (in g) of the material.

In the context of the present invention, the term "intra-particle pore" is to be understood as describing the space that is found within particles, i.e. the void space within porous particles. For example, the void space in an eggshell, or in an eggshell, which has been processed according to the inventive process, is an intra-particle pore.

Where an indefinite or definite article is used when referring to a singular noun, e.g., "a", "an" or "the", this includes a plural of that noun unless anything else is specifically stated.

Where the term "comprising" is used in the present description and claims, it does not exclude other elements. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Terms like "obtainable" or "definable" and "obtained" or "defined" are used interchangeably. This, for example, means that, unless the context clearly dictates otherwise, the term "obtained" does not mean to indicate that, for example, an embodiment must be obtained by, for example, the sequence of steps following the term "obtained" though such a limited understanding is always included by the terms "obtained" or "defined" as a preferred embodiment.

Whenever the terms "including" or "having" are used, these terms are meant to be equivalent to "comprising" as defined hereinabove.

In the following the present invention will be set out in more detail.

### The product according to the present invention

In one aspect of the present invention, a calcium carbonate-containing material is provided,
wherein the calcium carbonate-containing material is prepared from an avian eggshell,
wherein the calcium carbonate-containing material has a weight-median particle size *d*₅₀ of from 0.5 to 10 µm, and/or a weight top cut particle size *d*₉₈ of from 2.0 to 40 µm, and
wherein the calcium carbonate-containing material comprises organic matter in an amount of below 1.5 wt.%, based on the total dry weight of the calcium carbonate-containing material,
and wherein the calcium carbonate-containing material has

i) a brightness from 90 to 100%, according to R457, and/or
ii) L* from 95 to 100, according to DIN 6174.

The calcium carbonate-containing material according to the present invention is prepared from an avian eggshell, preferably from a pre-treated avian eggshell. A pre-treated avian eggshell, and ways of obtaining a pre-treated avian eggshell, are defined and described in detail below in connection with the inventive process.

According to one preferred embodiment, the calcium carbonate-containing material is prepared from a chicken eggshell. The chicken eggshell may be a white chicken eggshell, a brown chicken eggshell, or a combination of both. A white chicken eggshell is preferred.

The unique structure, composition and mineralization of an avian eggshell is known to the skilled person and is described, for example, by Hincke et al. in "The eggshell: structure, composition and mineralization", Frontiers in Bioscience, 17, 1266-1280. The eggshell is a biomineralized material containing inorganic and organic matter, of which the mineralized inorganic shell comprises about 95% of calcium carbonate. The calcium carbonate is predominantly in the crystal form of calcite. The structure of the eggshell is porous containing spherical voids in the nanometer range, which allow the exchange and/or passage of certain components through the eggshell into the inner part of the egg. Although the structure, composition and mineralization of an eggshell may vary within the species of birds, the unique intrinsic structure of an avian eggshell can be differentiated by a skilled person from the structure of other inorganic materials which are predominantly composed of calcium carbonate such as calcium carbonate-containing minerals like chalk, marble, limestone or dolomite or synthetic calcium carbonate like precipitated calcium carbonate.

The unique morphology of the inorganic material of the avian eggshell, for example, its porosity, its composition and/or its crystal structure, is at least partially conserved in the calcium carbonate-containing material according to the present invention. More precisely, the intrinsic features of an avian eggshell on the nano- and micrometer scale are at least partially conserved in the inventive calcium carbonate-containing material, even if the avian eggshell is submitted to physical processes such as grinding steps and/or chemical processes such as alkaline treatment or bleaching. Therefore, the calcium carbonate-containing material according to the present invention can be distinguished from known geological or synthetic calcium carbonate by its morphology, especially by its nanoporosity.

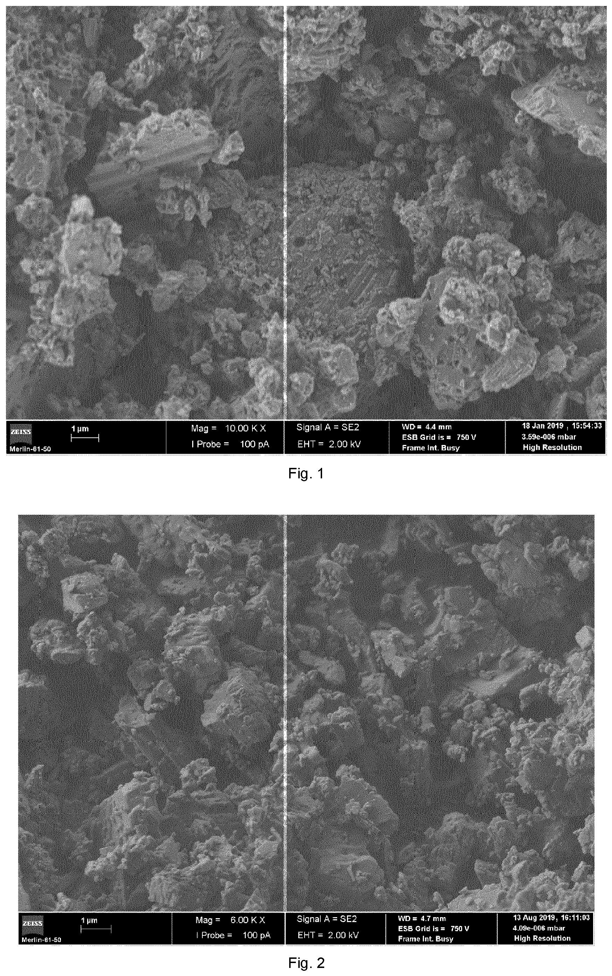

The product according to the present invention and conventional products containing calcium carbonate may for example be differentiated by a skilled person using scanning electron microscopy (SEM).The difference between the calcium carbonate-containing material according to the invention and a conventional ground calcium carbonate is, for example, shown in Figures 1 and 2.

Figure 1 shows a SEM image of a slurry of the calcium carbonate-containing material according to the invention. It can clearly be seen in Figure 1 that the larger particles (calcium carbonate) are nanoporous, i.e. they contain intra-particle pores in the nanometer range, and have a comparatively high surface roughness.

Figure 2 shows a SEM image of a slurry of ground calcium carbonate (GCC). Here, it can be seen that the larger particles (calcium carbonate) are not nanoporous, i.e. they do not contain intra-particle pores in the nanometer range. Further, the surface roughness of the GCC particles is comparatively low. The morphology of the GCC is different from the inventive calcium carbonate-containing material.

According to one preferred embodiment of the present invention, the calcium carbonate-containing material is obtainable by the inventive process as described herein. According to one preferred embodiment of the present invention, the calcium carbonate-containing material is obtained by the inventive process as described herein. According to one preferred embodiment of the present invention, the calcium carbonate-containing material is prepared from an avian eggshell, preferably a pre-treated avian eggshell, by the inventive process described herein.

The calcium carbonate-containing material has a weight-median particle size *d*₅₀ of from 0.5 to 10 µm, and/or a weight top cut particle size *d*₉₈ of from 2.0 to 40 µm.

According to one embodiment, the calcium carbonate-containing material has a weight-median particle size *d*₅₀ of from 0.5 to 10 µm, and/or a weight top cut particle size *d*₉₈ of from 2.0 to 50 µm. According to one embodiment, the calcium carbonate-containing material has a weight-median particle size *d*₅₀ of from 0.5 to 10 µm. According to one embodiment, the calcium carbonate-containing material has a weight top cut particle size *d*₉₈ of from 2.0 to 40 µm.

According to one embodiment of the present invention, the calcium carbonate-containing material has a weight-median particle size *d*₅₀ of from 1.0 to 7 µm, and more preferably from 2.5 to 5 µm, and/or wherein the calcium carbonate-containing material has a weight top cut particle size *d*₉₈ of from 5.0 to 35 µm, and more preferably from 10 to 25 µm, and/or wherein the calcium carbonate-containing material has a specific surface area of from 0.5 to 20 m²/g, preferably of from 1 to 15 m²/g, and more preferably of from 2 to 10 m²/g, measured using nitrogen and the BET method.

According to one embodiment of the present invention, the calcium carbonate-containing material has a weight-median particle size *d*₅₀ of from 1.0 to 7 µm, and more preferably from 2.5 to 5 µm. According to one embodiment of the present invention, the calcium carbonate-containing material has a weight top cut particle size *d*₉₈ of from 5.0 to 35 µm, and more preferably from 10 to 25 µm. According to one embodiment of the present invention, the calcium carbonate-containing material has a specific surface area of from 0.5 to 20 m²/g, preferably of from 1 to 15 m²/g, and more preferably of from 2 to 10 m²/g, measured using nitrogen and the BET method.

According to one embodiment of the present invention, the calcium carbonate-containing material has a weight-median particle size *d*₅₀ of from 1.0 to 7 µm, and more preferably from 2.5 to 5 µm, and the calcium carbonate-containing material has a weight top cut particle size *d*₉₈ of from 5.0 to 35 µm, and more preferably from 10 to 25 µm.

According to one embodiment of the present invention, the calcium carbonate-containing material has a weight-median particle size *d*₅₀ of from 1.0 to 7 µm, and more preferably from 2.5 to 5 µm, and the calcium carbonate-containing material has a weight top cut particle size *d*₉₈ of from 5.0 to 35 µm, and more preferably from 10 to 25 µm, and the calcium carbonate-containing material has a specific surface area of from 0.5 to 20 m²/g, preferably of from 1 to 15 m²/g, and more preferably of from 2 to 10 m²/g, measured using nitrogen and the BET method.

According to another embodiment, the calcium carbonate-containing material has a weight-median particle size *d*₅₀ of from 0.5 to 8 µm, preferably from 0.8 to 5 µm, and more preferably from 1.0 to 3 µm, and/or the calcium carbonate-containing material has a weight top cut particle size *d*₉₈ of from 1.0 to 25 µm, preferably from 1.5 to 20 µm, and more preferably from 2 to 10 µm. According to one embodiment, the calcium carbonate-containing material has a weight-median particle size *d*₅₀ of from 0.5 to 8 µm, preferably from 0.8 to 5 µm, and more preferably from 1.0 to 3 µm. According to one embodiment, the calcium carbonate-containing material has a weight top cut particle size *d*₉₈ of from 1.0 to 25 µm, preferably from 1.5 to 20 µm, and more preferably from 2 to 10 µm.

According to another embodiment, the calcium carbonate-containing material has a weight-median particle size *d*₅₀ of from 0.5 to 8 µm, preferably from 0.8 to 5 µm, and more preferably from 1.0 to 3 µm, and the calcium carbonate-containing material has a weight top cut particle size *d*₉₈ of from 1.0 to 25 µm, preferably from 1.5 to 20 µm, and more preferably from 2 to 10 µm.

The calcium carbonate-containing material according to the present invention is further characterized by its composition.

The calcium carbonate-containing material according to the present invention comprises organic matter in an amount of below 1.5 wt.%, based on the total dry weight of the calcium carbonate-containing material.

The amount of organic matter in the inventive product may be measured as mass difference of initial weight of the calcium carbonate-containing material before heat treatment at 400°C for 1 hour and weight of the calcium carbonate-containing material after 1 hour of heat treatment at 400°C, the weight being measured after cooling the heat treated avian eggshell in a desiccator.

According to one embodiment, the calcium carbonate-containing material comprises organic matter in an amount of below 1.0 wt.%, preferably of below 0.5 wt.%, more preferably of below 0.1 wt.%, even more preferably of below 0.05 wt.%, based on the total dry weight of the calcium carbonate-containing material.

According to one embodiment, the calcium carbonate-containing material comprises calcium carbonate in an amount of from 96.0 to 99.9 wt.%, preferably from 97.0 to 99.0 wt.%, based on the total dry weight of the calcium carbonate-containing material.

According to one embodiment, the calcium carbonate-containing material comprises calcium carbonate in an amount of from 96.0 to 99.9 wt.%, preferably from 97.0 to 99.0 wt.%, and further inorganic material, preferably a magnesium compound and/or a phosphorus compound, in an amount of 0.1 to 4.0 wt.%, preferably from 1.0 to 3.0 wt.%, based on the total dry weight of the calcium carbonate-containing material.

According to one embodiment, the calcium carbonate-containing material comprises calcium carbonate in an amount of from 96.0 to 99.9 wt.%, preferably from 97.0 to 99.0 wt.%, and organic matter in an amount of below 1.0 wt.%, preferably of below 0.5 wt.%, more preferably of below 0.1 wt.%, even more preferably of below 0.05 wt.%, based on the total dry weight of the calcium carbonate-containing material.

According to one embodiment, the calcium carbonate-containing material comprises calcium carbonate in an amount of from 96.0 to 99.9 wt.%, preferably from 97.0 to 99.0 wt.%, and further inorganic material, preferably a magnesium compound and/or a phosphorus compound, in an amount of 0.01 to 4.0 wt.%, preferably from 1.0 to 3.0 wt.%, and organic matter in an amount of below 1.0 wt.%, preferably of below 0.5 wt.%, more preferably of below 0.1 wt.%, even more preferably of below 0.05 wt.%, based on the total dry weight of the calcium carbonate-containing material.

According to one embodiment, the magnesium compound is magnesium carbonate and/or the phosphorus compound is calcium phosphate.

According to one embodiment, at least 95 wt.%, preferably at least 98 wt.%, more preferably at least 99 wt.% of the calcium carbonate is present in the crystal form of calcite.

According to one embodiment, the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy. The pore diameter of the intra-particle pore is measured by using a scanning electron microscope and determining the pore diameter of a pore by using the obtained SEM micrograph. The pore diameter may be determined by using an image analysis program known to the skilled person. In case one or more pores are spherical, the pore diameter refers to the largest measureable diameter of the spherical pore.

According to one embodiment, the calcium carbonate-containing material comprises calcium carbonate in an amount of from 96.0 to 99.9 wt.%, preferably from 97.0 to 99.0 wt.%, and organic matter in an amount of below 1.0 wt.%, preferably of below 0.5 wt.%, more preferably of below 0.1 wt.%, even more preferably of below 0.05 wt.%, based on the total dry weight of the calcium carbonate-containing material, wherein the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy.

According to one embodiment, the calcium carbonate-containing material comprises calcium carbonate in an amount of from 96.0 to 99.9 wt.%, preferably from 97.0 to 99.0 wt.%, and organic matter in an amount of below 1.0 wt.%, preferably of below 0.5 wt.%, more preferably of below 0.1 wt.%, even more preferably of below 0.05 wt.%, based on the total dry weight of the calcium carbonate-containing material, wherein the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy, and wherein at least 95 wt.%, preferably at least 98 wt.%, more preferably at least 99 wt.% of the calcium carbonate is present in the crystal form of calcite.

According to one embodiment, the calcium carbonate-containing material comprises calcium carbonate in an amount of from 96.0 to 99.9 wt.%, preferably from 97.0 to 99.0 wt.%, and organic matter in an amount of below 1.0 wt.%, preferably of below 0.5 wt.%, more preferably of below 0.1 wt.%, even more preferably of below 0.05 wt.%, based on the total dry weight of the calcium carbonate-containing material, wherein the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy, wherein at least 95 wt.%, preferably at least 98 wt.%, more preferably at least 99 wt.% of the calcium carbonate is present in the crystal form of calcite, and wherein the calcium carbonate-containing material has a weight-median particle size *d*₅₀ of from 1.0 to 7 µm, and more preferably from 2.5 to 5 µm, and/or wherein the calcium carbonate-containing material has a weight top cut particle size *d*₉₈ of from 5.0 to 35 µm, and more preferably from 10 to 25 µm,

The inventive calcium carbonate-containing material has specific optical characteristics.

The calcium carbonate-containing material according to the present invention has
i) a brightness from 90 to 100%, according to R457, and/or
ii) L* from 95 to 100, according to DIN 6174.

According to one embodiment, the calcium carbonate-containing material has a brightness from 90 to 100%, according to R457. According to one embodiment, the calcium carbonate-containing material has a L* from 95 to 100, according to DIN 6174.

According to a preferred embodiment, has i) a brightness from 90 to 100%, according to R457, and ii) L* from 95 to 100, according to DIN 6174.

According to one preferred embodiment, the calcium carbonate-containing material has
i) a brightness from 90 to 100%, preferably from 93 to 100%, according to R457, and/or
ii) L* from 95 to 100, preferably from 98 to 100, according to DIN 6174, and
iii) b* from 0 to 10, preferably from 1 to 5, according to DIN 6174, and/or
iv) y from 0.5 to 5.

The skilled person is familiar with these optical parameter, knows how to measure these parameters, and which equipment is necessary for measuring these parameters.

According to one preferred embodiment, the optical properties of the calcium carbonate-containing material are measured for a powder obtained by the drying of an aqueous suspension consisting of water, 70 wt.% of the inventive calcium carbonate-containing material, 0.15 wt.% of a sodium polyacrylate-type dispersant or a sodium polyacrylate dispersant, and 0.1 wt.% of a cellulosic thickener, based on the total weight of the suspension.

According to a more preferred embodiment, the optical properties of the calcium carbonate-containing material are measured as described in the example section of the description.

According to one preferred embodiment, the calcium carbonate-containing material has
i) a brightness from 90 to 100%, preferably from 93 to 100%, according to R457, and
ii) L* from 95 to 100, preferably from 98 to 100, according to DIN 6174, and
iii) b* from 0 to 10, preferably from 1 to 5, according to DIN 6174, and/
iv) y from 0.5 to 5.

According to one preferred embodiment, the calcium carbonate-containing material has
i) a brightness from 93 to 100%, according to R457, and
ii) L* from 98 to 100, according to DIN 6174, and
iii) b* from 0 to 10, preferably from 1 to 5, according to DIN 6174, and
iv) y from 0.5 to 5.

According to one embodiment, the calcium carbonate-containing material has
i) a brightness from 93 to 100%, according to R457, and
ii) L* from 98 to 100, according to DIN 6174, and
iii) b* from 0 to 10, preferably from 1 to 5, according to DIN 6174, and
iv) y from 0.5 to 5,
as measured for a powder obtained by the drying of an aqueous suspension consisting of water, 70 wt.% of the calcium carbonate-containing material, 0.15 wt.% of a sodium polyacrylate-type or a sodium polyacrylate dispersant, and 0.1 wt.% of a cellulosic thickener, based on the total weight of the suspension.

The calcium carbonate-containing material according to the present invention may be provided in dry or in liquid form.

According to one embodiment, the calcium carbonate-containing material is provided in dry form. For example, the calcium carbonate-containing material may have a residual moisture content of below 5.0 wt.%, preferably of below 3.0 wt.%, and more preferably of below 1.0 wt.%, based on the total weight of the calcium carbonate-containing material.

According to another embodiment, the calcium carbonate-containing material is provided in liquid form, i.e. in form of an aqueous suspension, preferably in form of a slurry. According to one embodiment, the aqueous suspension comprises the calcium carbonate-containing material in an amount of 1 to 90 wt.%, based on the total weight of the aqueous suspension. According to one preferred embodiment, the calcium carbonate-containing material is provided in form of a slurry. As defined above, a "slurry" in the meaning of the present invention refers to an aqueous suspension having a solids content, e.g. calcium carbonate-containing material, of 30.0 to 78.0 wt.-%, more preferably from 40.0 to 78.0 wt.-% and most preferably from 45.0 to 78.0 wt.-%, based on the total weight of the aqueous suspension. Therefore, according to one preferred embodiment, the aqueous suspension comprises the calcium carbonate -containing material in an amount of 30.0 to 78.0 wt.-%, more preferably from 40.0 to 78.0 wt.-% and most preferably from 45.0 to 78.0 wt.-%, based on the total weight of the aqueous suspension.

The aqueous suspension may comprise further components. For example, the aqueous suspension may comprise further components for controlling and/or stabilizing the rheology of the aqueous suspension or for controlling the microbial growth in the aqueous suspension.

According to one embodiment, the aqueous suspension, preferably slurry, comprises further components selected from the group consisting of dispersing agents, thickeners, disinfectants, biocides, and mixtures thereof. According to a preferred embodiment, the aqueous suspension, preferably slurry, comprises a dispersing agent, a thickener and a biocide.

According to one embodiment, the aqueous suspension, preferably slurry has a viscosity of from 500 to 2000 cP, preferably from 800 to 1500 cP, more preferably from 1000 to 1300 cP. The viscosity refers to the Brookfield viscosity, which is measured by the use of a RVT model Brookfield^{™} viscometer at a temperature of 23° C. and a rotation speed of 60 rpm (revolutions per minute) with the appropriate disc spindle 2, 3, 4, or 6, taking the value of the viscosity 30 seconds after starting the viscometer rotation.

According to one embodiment, the calcium carbonate-containing material is provided in form of a slurry having
i) a brightness from 90 to 100%, preferably from 93 to 100%, according to R457, and
ii) L* from 95 to 100, preferably from 98 to 100, according to DIN 6174, and
iii) b* from 0 to 10, preferably from 1 to 5, according to DIN 6174, and
   iv) y from 0.5 to 5,
as measured for a powder obtained by the drying of an aqueous suspension consisting of water, 70 wt.% of the calcium carbonate-containing material, 0.15 wt.% of a sodium polyacrylate-type or a sodium polyacrylate dispersant, and 0.1 wt.% of a cellulosic thickener, based on the total weight of the suspension.

According to one preferred embodiment, the calcium carbonate-containing material is provided in form of a slurry,
wherein the calcium carbonate-containing material has a weight-median particle size *d*₅₀ of from 1.0 to 7 µm, and more preferably from 2.5 to 5 µm, and/or wherein the calcium carbonate-containing material has a weight top cut particle size *d*₉₈ of from 5.0 to 35 µm, and more preferably from 10 to 25 µm,
the calcium carbonate-containing material comprises calcium carbonate in an amount of from 96.0 to 99.9 wt.%, preferably from 97.0 to 99.0 wt.%, based on the total dry weight of the calcium carbonate-containing material,
and wherein the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm.

### The process according to the present invention

Another aspect of the present invention refers to a process for preparing a calcium carbonate-containing material according to the invention, the process comprising the steps of:
a) providing a pre-treated avian eggshell,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm,
c) treating the pre-treated avian eggshell during step b) with a base or treating the ground avian eggshell after step b) with a base,
d) optionally separating the ground avian eggshell from the aqueous suspension obtained in step b) or c),
e) treating the ground avian eggshell obtained in step c), or in optional step d), with a bleaching agent.

### • Step a) of the inventive process

In step a) of the inventive process, a pre-treated avian eggshell is provided.

The pre-treated avian eggshell may be provided in dry form or in form of an aqueous suspension. According to one embodiment, the pre-treated avian eggshell is provided in form of an aqueous suspension. According to one embodiment, the pre-treated avian eggshell is provided in form of an aqueous suspension, wherein the aqueous suspension has an avian eggshell content in the range from 5 to 70 wt.%, preferably from 10 to 60 wt.%, more preferably from 20 to 50 wt.%, based on the total weight of the aqueous suspension.

According to a preferred embodiment, the pre-treated avian eggshell is provided in dry form. For example, the pre-treated avian eggshell may have a residual moisture content of below 5.0 wt.%, preferably of below 3.0 wt.%, and more preferably of below 1.0 wt.%, based on the total weight of the pre-treated avian eggshell. A suitable method for determining the water content of the pre-treated avian eggshell will be selected by the skilled person. For example, the water content may be determined according to the Coulometric Karl Fischer measurement method, wherein the composition is heated to 220 °C, and the water content released as vapour and isolated using a stream of nitrogen gas (at 100 ml/min) is determined in a Coulometric Karl Fischer unit.

A pre-treated avian eggshell according to step a), i.e. avian eggshell, wherein the inner shell membrane has been removed, are known to the skilled person. For example, the pre-treated avian eggshell according to step a) may be provided by the method described in WO 98/41326.

For example, a pre-treated avian eggshell may be obtained by a process comprising the steps of:
i) washing waste avian eggshell,
ii) coarse grinding the waste avian eggshell of step i) to a particle size of below 5 mm, as measured by sieve analysis,
iii) one or more steps of washing the coarse ground avian eggshell of step ii) with water followed by decantation of water,
iv) drying the coarse ground avian eggshell.

The skilled person can select the suitable equipment and conditions for carrying out the process according to steps i) to iv).

The washing of step i) and/or step iii) may be carried out with a conventional industrial washing machine known to the skilled person. Step iii) may be carried out 1 to 5 times, for example, 3 times.

The coarse grinding of step ii) may be carried out with a cutting mill or a hammer mill, for example, with a Forplex mill F0 Type from Poittemill Forplex Biehler, France.

The drying of step iv) may be carried out at room temperature or at elevated temperature. The drying step iv) may be carried out in a tumble dryer, a centrifugal dewatering machine or an airjet dryer.

The pre-treated avian eggshell according to step a) may comprise organic matter in an amount of from 0.5 to 10 wt.%, preferably from 1 to 5 wt.%, and more preferably from 1.5 to 4 wt.%, based on the total dry weight of the pre-treated avian eggshell.

The particle size of the pre-treated avian eggshell according to step a) is not particularly limited. According to one preferred embodiment, the pre-treated avian eggshell according to step a) has a particle size of below 5 mm, as measured by sieve the analysis. In other words, it is preferred that the pre-treated avian eggshell according to step a) passes through a sieve having a mesh of 5 mm. For example, the pre-treated avian eggshell according to step a) may have a particle size of below 3 mm. It is also possible that the pre-treated avian eggshell according to step a) has a particle size of below 250 µm.

A pre-treated avian eggshell having a particle size of below 5 mm, as measured by sieve analysis, may be obtained by subjecting a pre-treated avian eggshell to a dry grinding step. A suitable mill for carrying out the dry grinding step is, for example, a high-speed mill, which may be operated at 18000 rpm and with a 0.2 mm grid.

For example, a pre-treated avian eggshell according to step a) having a particle size of below 5 mm, as measured by sieve the analysis, may be obtained by a process comprising the following steps:
i) washing waste avian eggshell,
ii) coarse grinding the waste avian eggshell of step i) to a particle size of below5 mm, as measured by sieve analysis,
iii) one or more steps of washing the coarse ground avian eggshell of step ii) with water followed by decantation of water,
iv) drying the coarse ground avian eggshell,
v) dry grinding the coarse ground avian eggshell of step iv) to a particle size of below 3 mm, preferably below 250 µm, as measured by sieve the analysis.

The pre-treated avian eggshell according to step a) is not particularly limited to in eggshell of a particular bird egg. However, the avian eggshell of certain bird eggs are preferred. According to one preferred embodiment, the pre-treated avian eggshell according to step a) is the shell of a chicken egg.

The pre-treated avian eggshell according to step a) is not particularly limited to a particular colour. It is however preferred that the pre-treated avian eggshell according to step a) is a brown avian eggshell, a white avian eggshell, or a combination of both.

The skilled person knows what is to be considered a "brown" eggshell and a "white" eggshell.

A white eggshell may be an eggshell, which has a brightness of at least 80%, according to R457, preferably of at least 85%, according to R457.

Preferably, the pre-treated avian eggshell according to step a) is an eggshell of a chicken. For example, the pre-treated eggshell may be a brown chicken eggshell, a white chicken eggshell, or a combination of both.

According to a preferred embodiment, the pre-treated avian eggshell according to step a) is obtained by a process comprising the following steps:
i) washing waste eggshell of chicken,
ii) coarse grinding the waste white eggshell of step i) to a particle size of below 5 mm, as measured by sieve analysis,
iii) one or more steps of washing the coarse ground eggshell of step ii) with water followed by decantation of water,
iv) drying the coarse ground eggshell,
v) dry grinding the coarse ground eggshell of step iv) to a particle size of below 3 mm, preferably below 250 µm, as measured by sieve the analysis.

The pre-treated avian eggshell of step a) may comprise one or more inorganic materials in the amount of from 90 to 98 wt.%, preferably from 92 to 98 wt.%, and more preferably from 95 to 98 wt.%, and organic material in the amount of from 2 to 10 wt.%, preferably from 2 to 8 wt.%, and more preferably from 2 to 5 wt.%, based on the total dry weight of the pre-treated avian egg shell.

According to another preferred embodiment, the pre-treated avian eggshell according to step a) is a pre-treated white eggshell of a chicken having a particle size of below 5 mm, as measured by sieve the analysis.

According to another preferred embodiment, the pre-treated avian eggshell according to step a) is a pre-treated white eggshell of a chicken having a particle size of below 5 mm, as measured by sieve the analysis, and wherein the pre-treated avian eggshell is provided in dry form.

### • Step b) and step c) of the inventive process

In step b) of the inventive process, an aqueous suspension of the pre-treated avian eggshell of step a) is ground to obtain an aqueous suspension comprising a ground avian eggshell having a weight-median particle size *d*₅₀ of from 0.5 to 10 µm, and/or a weight top cut particle size *d*₉₈ of from 2.0 to 40 µm.

According to one embodiment, an aqueous suspension of the pre-treated avian eggshell of step a) is ground in step b) to obtain an aqueous suspension comprising a ground avian eggshell having a weight-median particle size *d*₅₀ of from 0.5 to 10 µm.

According to one embodiment, an aqueous suspension of the pre-treated avian eggshell of step a) is ground in step b) to obtain an aqueous suspension comprising a ground avian eggshell having a weight top cut particle size *d*₉₈ of from 2.0 to 40 µm.

According to one embodiment, an aqueous suspension of the pre-treated avian eggshell of step a) is ground in step b) to obtain an aqueous suspension comprising a ground avian eggshell having a weight-median particle size *d*₅₀ of from 0.5 to 10 µm, and a weight top cut particle size *d*₉₈ of from 2.0 to 40 µm.

The grinding according to step b) may be an autogenous grinding step, a semi-autogenous grinding step or a grinding step, which is carried out in the presence of a grinding medium. According to a preferred embodiment, the grinding according to step b) is carried out in the presence of a grinding medium.

The grinding medium is not limited to a specific grinding medium as long as the grinding medium is suitable for grinding a pre-treated avian eggshell. Preferably, the grinding medium is selected from the group consisting of metallic grinding media and non-metallic grinding media. Suitable metallic grinding media is, for example, made of carbon steel, forged steel, stainless steel or chrome steel. Suitable non-metallic grinding media is, for example, made of alumina, ceramics, glass, silicon carbide or zirconium oxide. Preferably, the grinding medium is a non-metallic grinding medium. Most preferably, the grinding medium is a ceramic grinding medium, e.g. an alumina grinding medium.

The size of the grinding medium will be selected by the skilled person according to the type of grinding medium and/or grinding equipment used for the grinding step or size of the desired final product. According to one embodiment, the grinding medium has a size in the range of 100 µm to 10 mm, preferably in the range of 1 to 8 mm, more preferably 3 to 5 mm.

The amount of grinding medium used per kg of pre-treated avian eggshell may be varied by the skilled person according to the requirements of the grinding medium and/or grinding equipment. In one embodiment, the grinding medium is used in an amount of ranging from 1 kg (grinding medium)/ 1kg (pre-treated avian eggshell) to 15 kg (grinding medium)/ 1kg (pre-treated avian eggshell), preferably from 3 kg (grinding medium)/ 1kg (pre-treated avian eggshell) to 10 kg (grinding medium)/ 1kg (pre-treated avian eggshell), and more preferably from 5 kg (grinding medium)/ 1kg (pre-treated avian eggshell) to 7 kg (grinding medium)/ 1kg (pre-treated avian eggshell).

The grinding according to step b) may be carried out in any grinding mill, which is suitable for grinding avian eggshells. For example, the grinding according to step b) may be carried out in autogenous mill, a semi-autogenous mill, a ball mill, an attrition mill or a sand mill. Preferably, the grinding according to step b) is carried out in a ball mill, an attrition mill or a sand mill. In a preferred embodiment of the present invention, the grinding according to step b) is carried out in a sand mill, more preferably in a continuous sand mill.

According to one preferred embodiment, the grinding according to step b) is carried out in a sand mill using ceramic grinding medium having a size in the range of 3 to 5 mm, wherein the grinding medium is used in an amount of ranging from 5 kg (grinding medium)/ 1kg (pre-treated avian eggshell) to 7 kg (grinding medium)/ 1kg (pre-treated avian eggshell).

According to one preferred embodiment, the grinding according to step b) is carried out in a sand mill using a grinding media, preferably a ceramic grinding media, at a sandmill speed of 0.1 to 20 m/s, preferably 1 to 10 m/s, and more preferably 3 to 8 m/s. For example, the grinding according to step b) may be carried out in a sand mill using a grinding media, preferably a ceramic grinding media, at a sandmill speed of 6.3 m/s.

The aqueous suspension comprising the pre-treated avian eggshell according to step b) may have a specific avian eggshell content. According to one preferred embodiment, step b) refers to grinding an aqueous suspension comprising the pre-treated avian eggshell according to step a), wherein the aqueous suspension has an avian eggshell content in the range from 5 to 70 wt.%, preferably from 10 to 60 wt.%, more preferably from 20 to 50 wt.%, based on the total weight of the aqueous suspension. In one embodiment, the aqueous suspension has an avian eggshell content in the range from 20 to 30 wt.%, based on the total weight of the aqueous suspension. In another embodiment, the aqueous suspension has an avian eggshell content in the range from 40 to 50 wt.%, based on the total weight of the aqueous suspension.

It is one requirement of the inventive process that the pre-treated avian eggshell is ground in step b) to a ground avian eggshell having a weight-median particle size *d*₅₀ of from 0.5 to 10 µm, and/or a weight top cut particle size *d*₉₈ of from 2.0 to 40 µm.

According to one embodiment, the ground avian eggshell obtained after the grinding step b) has a weight-median particle size *d*₅₀ of from 1.0 to 7 µm, and more preferably from 2.5 to 5 µm, and/or the ground avian eggshell obtained in step b) has a weight top cut particle size *d*₉₈ of from 5.0 to 35 µm, and more preferably from 10 to 25 µm, and/or the ground avian eggshell material obtained in step b) has a specific surface area of from 0.5 to 20 m²/g, preferably of from 1 to 15 m²/g, and more preferably of from 2 to 10 m²/g, measured using nitrogen and the BET method.

According to one embodiment, the ground avian eggshell obtained after the grinding step b) has a weight-median particle size *d*₅₀ of from 1.0 to 7 µm, and more preferably from 2.5 to 5 µm, and the ground avian eggshell obtained in step b) has a weight top cut particle size *d*₉₈ of from 5.0 to 35 µm, and more preferably from 10 to 25 µm.

According to one embodiment, the ground avian eggshell obtained after the grinding step b) has a weight-median particle size *d*₅₀ of from 1.0 to 7 µm, and more preferably from 2.5 to 5 µm, and the ground avian eggshell obtained in step b) has a weight top cut particle size *d*₉₈ of from 5.0 to 35 µm, and more preferably from 10 to 25 µm, and the ground avian eggshell obtained in step b) has a specific surface area of from 0.5 to 20 m²/g, preferably of from 1 to 15 m²/g, and more preferably of from 2 to 10 m²/g, measured using nitrogen and the BET method.

In step c) of the inventive process, the pre-treated avian eggshell is treated with a base during step b) or the ground avian eggshell is treated with a base after step b). According to one embodiment, the pre-treated avian eggshell is treated with a base during step b). According to another embodiment, the ground avian eggshell is treated with a base after step b). It is preferred that the pre-treated avian eggshell is treated with a base during step b).

The base for treating the pre-treated or ground avian eggshell is not particularly limited. However, certain bases may be more preferred than others due to a specific strength, availability, reusability, disposability, etc.. According to one embodiment, the base used in step c) is a base having a pK_{B} in the range of from -5 to 8, preferably of from -2 to 5, more preferably of from -1 to 1.

According to another embodiment, the base of step c) is a base selected from the group consisting of hydroxide salts, ammonia, PO₄³⁻ salts, CO₃²⁻ salts and mixtures thereof. Hydroxide salts, PO₄³⁻ salts and CO₃²⁻ salts are well known to the skilled person. Hydroxide salts are, for example, lithium hydroxide, sodium hydroxide, potassium hydroxide and cesium hydroxide. A PO₄³⁻ salts is, for example, trisodium phosphate. A CO₃²⁻ salt is, for example, disodium carbonate.

According to a preferred embodiment, the base of step c) is selected from the group consisting of hydroxide salts and mixtures thereof. Preferred hydroxide salts are potassium hydroxide, sodium hydroxide or mixtures thereof. Most preferably, the base of step c) is sodium hydroxide.

The base of step c) may be provided in pure form, in form of an aqueous solution or in form of an aqueous suspension. According to a preferred embodiment, the base of step c) is provided in form of an aqueous solution. According to another preferred embodiment, the base of step c) is provided in form of an aqueous solution, wherein the base is a hydroxide salt, preferably potassium hydroxide and/or sodium hydroxide, and more preferably sodium hydroxide.

In case the base of step c) is provided in form of an aqueous solution, the aqueous solution may have a particular concentration of the base. According to one embodiment, the aqueous solution comprises the base in a concentration of from 0.01 to 10 mol/L, preferably from 0.1 to 2 mol/L, and more preferably from 0.2 to 1 mol/L. According to another embodiment, the aqueous solution comprises the base in an amount of from 1 to 200 g/L, preferably from 5 to 100 g/L, more preferably from 10 to 50 g/L, and most preferably from 20 to 30 g/L. According to one embodiment, the aqueous solution comprises the base in a concentration of from 0.01 to 10 mol/L, preferably from 0.1 to 2 mol/L, and more preferably from 0.2 to 1 mol/L, wherein the base is potassium hydroxide and/or sodium hydroxide, preferably sodium hydroxide. According to another embodiment, the aqueous solution comprises the base in an amount of from 1 to 200 g/L, preferably from 5 to 100 g/L, more preferably from 10 to 50 g/L, and most preferably from 20 to 30 g/L, wherein the base is potassium hydroxide and/or sodium hydroxide, preferably sodium hydroxide. According to an exemplary embodiment, the aqueous solution comprises the base in an amount of 25 g/L, wherein the base is sodium hydroxide.

It is preferred that the pre-treated avian eggshell of step a) is treated with a base during the grinding step b). Accordingly, step b) is preferably a grinding of an aqueous suspension comprising the pre-treated avian eggshell of step a) and a base.

It is to be understood that a treatment of the pre-treated avian eggshell "during" the grinding step b) is meant to refer to the embodiment of the inventive process, wherein first the aqueous suspension comprising the pre-treated avian eggshell of step a) and a base is prepared, followed by subjecting the aqueous suspension to the grinding step b) or to the embodiment, wherein the aqueous suspension comprising the pre-treated avian eggshell of step a) is subjected to the grinding step b) while the base is mixed to the aqueous suspension simultaneously to the grinding. Preferably, grinding step b) is carried out by preparing first the aqueous suspension comprising the pre-treated avian eggshell of step a) and the base, followed by subjecting the aqueous suspension to the grinding step b).

According to one preferred embodiment, the pre-treated avian eggshell is treated with a base during step b). According to one embodiment, the pre-treated avian eggshell is treated with a base during step b), wherein grinding step b) is carried out by preparing first the aqueous suspension comprising the pre-treated avian eggshell of step a) and the base, followed by subjecting the aqueous suspension to the grinding step b).

It has surprisingly been found by the inventors that the treatment of the pre-treated avian eggshell with the base during grinding step b) is particularly advantageous. For example, the inventors surprisingly found that the inventive process comprising the steps of treating the pre-treated avian eggshell with the base during grinding, i.e. a process which refers to the grinding of an aqueous suspension of the pre-treated avian eggshell and a base, results in the product, which has little or no odor, and/or which develops little or no odor during storage (e.g. after storage of the product obtained in the inventive process for one week at 30°C). In order to be accepted on the market, a recycled product has to perform equally or even better than the conventional raw material used for the same purpose. Therefore, the fact that the inventive product has little or no odor is important for its application.

In case the pre-treated avian eggshell of step a) is treated with a base during the grinding of step b), there are several options for preparing the aqueous suspension comprising the pre-treated avian eggshell and the base, before subjecting this aqueous suspension to grinding step b). According to one embodiment, the pre-treated avian eggshell of step a) is provided in dry form, the base of step c) is provided in form of an aqueous solution, followed by mixing the avian eggshell with the base to obtain an aqueous suspension comprising the pre-treated avian eggshell and the base. According to another embodiment, the pre-treated avian eggshell of step a) is provided in form of an aqueous suspension, the base of step c) is provided in form of an aqueous solution, followed by mixing the avian eggshell with the base to obtain an aqueous suspension comprising the pre-treated avian eggshell and the base. According to yet another embodiment, the pre-treated avian eggshell of step a) is provided in form of an aqueous suspension, the base of step c) is provided in pure form, followed by mixing the avian eggshell with the base to obtain an aqueous suspension comprising the pre-treated avian eggshell and the base.

According to one embodiment, the aqueous suspension comprises the base in a concentration of from 0.01 to 10 mol/L, preferably from 0.1 to 2 mol/L, and more preferably from 0.2 to 1 mol/L. According to another embodiment, the aqueous suspension comprises the base in an amount of from 1 to 200 g/L, preferably from 5 to 100 g/L, more preferably from 10 to 50 g/L, and most preferably from 20 to 30 g/L. According to one embodiment, the aqueous suspension comprises the base in a concentration of from 0.01 to 10 mol/L, preferably from 0.1 to 2 mol/L, and more preferably from 0.2 to 1 mol/L, wherein the base is potassium hydroxide and/or sodium hydroxide, preferably sodium hydroxide. According to another embodiment, the aqueous suspension comprises the base in an amount of from 1 to 200 g/L, preferably from 5 to 100 g/L, more preferably from 10 to 50 g/L, and most preferably from 20 to 30 g/L, wherein the base is potassium hydroxide and/or sodium hydroxide, preferably sodium hydroxide. According to an exemplary embodiment, the aqueous suspension comprises the base in an amount of 25 g/L, wherein the base is sodium hydroxide.

According to one preferred embodiment, the pre-treated avian eggshell of step a) is provided in dry form, the base of step c) is provided in form of an aqueous solution, followed by mixing the avian eggshell with the base to obtain an aqueous suspension comprising the pre-treated avian eggshell and the base.

According to one preferred embodiment, the steps b) and c) of the inventive process are as follows:
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm,
   and wherein the aqueous suspension has an avian eggshell content in the range from 20 to 50 wt.%, based on the total weight of the aqueous suspension,
c) treating the pre-treated avian eggshell during step b) with a base, wherein the base is a base selected from the group consisting of hydroxide salts, ammonia, POₐ³⁻ salts, CO₃²⁻ salts and mixtures thereof, preferably the base is potassium hydroxide and/or sodium hydroxide.

According to one preferred embodiment, the steps b) and c) of the inventive process are as follows:
b) grinding an aqueous suspension comprising the pre-treated avian eggshell of step a) to obtain an aqueous suspension comprising a ground eggshell having a weight-median particle size *d*₅₀ of from 0.5 to 10 µm, and/or a weight top cut particle size *d*₉₈ of from 2.0 to 40 µm,
   wherein the grinding is carried out in a sand mill using ceramic grinding media,
   and wherein the aqueous suspension has an avian eggshell content in the range from 20 to 50 wt.%, based on the total weight of the aqueous suspension,
c) treating the pre-treated avian eggshell during step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
   wherein the aqueous suspension comprises the base in an amount of from 10 to 50 g/L, and most preferably from 20 to 30 g/L.

According to another embodiment, the ground avian eggshell is treated in step c) with a base after step b). It is to be understood that a treatment of the avian eggshell "after" the grinding step b) refers to a treatment of the ground avian eggshell obtained in grinding step b).

In case the ground avian eggshell is treated with the base after step b), the base may be added directly to the aqueous mixture obtained in grinding step b). Alternatively, an aqueous suspension comprising the ground avian eggshell may be separated from the aqueous mixture obtained in grinding step b), for example, when grinding step b) was carried out in the presence of grinding media.

According to one embodiment, the ground avian eggshell is treated with a base in step c) after step b) by adding the base to the mixture obtained in step b). According to an alternative embodiment, the ground avian eggshell is treated with a base in step c) after step b) by adding the base to an aqueous suspension comprising ground avian eggshell, wherein the aqueous suspension has been separated from the mixture obtained in step b).

According to one embodiment, step c) of the inventive process refers to:
c1) separating the ground avian eggshell from the mixture obtained in step b),
c) treating the ground avian eggshell after step b) with a base.

According to one embodiment, step c) of the inventive process refers to:
c1) separating the ground avian eggshell in form of an aqueous suspension from the mixture obtained in step b),
c) treating the ground avian eggshell after step b) with a base.

In case the ground avian eggshell is treated with a base after step b), the treatment of the ground avian eggshell may be carried out in any equipment being suitable therefor. For example, the treatment may be carried out in a vessel, optionally equipped with a stirrer. According to one embodiment, treating step c) is carried out in a vessel, preferably equipped with a stirrer.

Treating step c) is not particularly limited to a specific temperature. However, it can be advantageous to carry out treating step c) at elevated temperatures, i.e. temperatures above 20°C. According to one embodiment, treating step c) is carried out at a temperature in the range of from 20 to 100°C, preferably from 40 to 90°C, more preferably from 60 to 90°C. For example, treating step c) may be carried out at a temperature of 85°C.

According to one embodiment, step c) of the inventive process refers to:
c1) separating the ground avian eggshell from the mixture obtained in step b),
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide.

According to one embodiment, step c) of the inventive process refers to:
c1) separating the ground avian eggshell from the mixture obtained in step b),
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
   wherein treating step c) is carried out at a temperature in the range of from 40 to 90°C, more preferably from 60 to 90°C.

According to one embodiment, step c) of the inventive process refers to:
c1) separating the ground avian eggshell in form of an aqueous suspension from the mixture obtained in step b),
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
   wherein treating step c) is carried out at a temperature in the range of from 40 to 90°C, more preferably from 60 to 90°C,
   wherein treating step c) is carried out in an aqueous suspension comprising the ground eggshell and a base, wherein the aqueous suspension comprises the base in an amount of from 5 to 100 g/L, and most preferably from 30 to 70 g/L.

According to one embodiment, step c) of the inventive process refers to:
c1) separating the ground avian eggshell in form of an aqueous suspension from the mixture obtained in step b),
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
   wherein treating step c) is carried out at a temperature in the range of from 40 to 90°C, more preferably from 60 to 90°C,
   wherein treating step c) is carried out in an aqueous suspension comprising the ground eggshell and a base, wherein the aqueous suspension comprises the base in an amount of from 5 to 100 g/L, and most preferably from 30 to 70 g/L,
   and wherein the aqueous suspension has an avian eggshell content in the range from 20 to 50 wt.%, based on the total weight of the aqueous suspension.

### • Optional step d) of the inventive process

In optional step d) of the inventive process, the ground avian eggshell is separated from the aqueous suspension obtained in step b) or c).

Step d) is optional. However, it is preferred that the inventive process comprises step d). Thus, according to one preferred embodiment, the inventive process comprises step d).

It is to be understood that step d) is carried out with an aqueous suspension obtained in step b) or c) comprising avian eggshell, which has been ground according to step b) and treated with a base according to step c). Therefore, it is to be understood that, when optional step d) refers to separating the ground avian eggshell from the aqueous suspension obtained in step b), step c) has been carried out during step b). It is further to be understood that when optional step d) refers to separating the ground avian eggshell from the aqueous suspension obtained in step c), step c) has been carried out after step b).

According to one embodiment, step d) refers to separating the ground avian eggshell from the aqueous suspension obtained in step b) or c) to obtain the ground avian eggshell in solid or pasty form.

A skilled person can adapt the separation step d) according to his needs, and especially in view of how and on which scale the steps a) to c) are carried out. For example, in case grinding media is used in step b) and step c), the grinding media may be removed by a sieving step to obtain an aqueous suspension comprising ground eggshell and a base, which may then be filtered to separate the ground avian eggshell. In another example, grinding media used in step b) may already have been separated before step c) is carried out, then a ground avian eggshell may be separated by a filtration step only.

The ground avian eggshell may be separated from the aqueous suspension obtained in step b) or c) by any means known to the skilled person for separating a solid material from an aqueous mixture. According to one embodiment, the ground avian eggshell is separated from the aqueous suspension obtained in step b) or c) by sieving, a hydrocyclone process, filtration, centrifugation, decanting, evaporation or combinations thereof, preferably by sieving, filtration, decanting or mixtures thereof, more preferably by sieving and/or filtration.

According to one embodiment, step d) refers to removing grinding media from the aqueous suspension obtained in step b) to obtain an aqueous suspension, and filtering the aqueous suspension to obtain the ground avian eggshell.

According to one embodiment, step d) refers to filtering the aqueous suspension obtained in step c) to obtain the ground avian eggshell.

According to one embodiment, step d) refers to filtering the aqueous suspension obtained in step c) to obtain the ground avian eggshell in form of a filter cake.

Furthermore, step d) may comprise a step d2) of washing the separated ground avian eggshell.

Furthermore, step d) may comprise a step d3) of drying and/or re-suspending the separated ground avian eggshell.

### • Step e) of the inventive process

In step e) of the inventive process, the ground avian eggshell obtained in step c), or in optional step d), is treated with a bleaching agent.

It is possible that step e) is carried out directly after step c) without separating the ground eggshell in step d). In such case, the bleaching agent can be added directly to the aqueous suspension obtained in step c).

It is however preferred that the ground eggshell obtained in step c) is separated first by carrying out step d) before carrying out step e). Thus, according to a preferred embodiment of step e), the ground avian eggshell obtained in step d) is treated with a bleaching agent.

Step e) may be carried out in any reactor and/or vessel, which is suitable for carrying out bleaching of a material. Such equipment is known to the skilled person. For example, step e) may be carried out in a vessel, optionally equipped with a stirring device. According to one embodiment, step e) is carried out in a vessel, which is preferably equipped with a stirring device.

The bleaching agent is not limited to a specific bleaching agent, however oxidative bleaching agents are preferred. According to one preferred embodiment, the bleaching agent is an oxidative bleaching agent. Preferably, the oxidative bleaching agent is selected from the group consisting of percarbonate salts, perborate salts, peroxy acids, hydrogen peroxide, hypochlorite salts and mixtures thereof. More preferably, the oxidative bleaching agent is selected from the group consisting of hypochlorite salts and mixtures thereof. A particularly preferred bleaching agent is sodium hypochlorite.

The bleaching agent may be provided in any form, which is available to the skilled person. The skilled person will use, dissolve and/or dilute the bleaching agent according to his needs. According to one embodiment, the bleaching agent is used in form of an aqueous solution.

According to one embodiment, the bleaching agent is used in form of an aqueous solution, wherein the bleaching agent is present in the aqueous solution in an amount of from 1 to 200 g/L, preferably from 5 to 150 g/L, more preferably from 10 to 100 g/L, most preferably from 20 to 80 g/L. According to one embodiment, the bleaching agent is used in form of an aqueous solution, wherein the bleaching agent is present in the aqueous solution in a concentration of from 0.01 to 5 mol/L, preferably from 0.1 to 2 mol/L, more preferably from 0.25 to 1.5 mol/L, and most preferably from 0.5 to 1 mol/L.

According to a preferred embodiment, the bleaching agent is an aqueous solution of a hypochlorite salt, preferably sodium hypochlorite. According to another preferred embodiment, the bleaching agent is an aqueous solution of a hypochlorite salt, preferably sodium hypochlorite, wherein the bleaching agent is present in the aqueous solution in an amount of from 1 to 200 g/L, preferably from 5 to 150 g/L, more preferably from 10 to 100 g/L, most preferably from 20 to 80 g/L.

According to one embodiment, the bleaching agent is used in form of an aqueous solution, wherein the bleaching agent is present in the aqueous solution in an amount of from 1 to 200 g/L, preferably from 5 to 150 g/L, more preferably from 10 to 100 g/L, most preferably from 20 to 80 g/L, and the bleaching agent is used in an amount of in the range of 0.1 L/1 kg (ground avian eggshell) to 10 L/1 kg (ground avian eggshell), preferably 0.5 L/1 kg (ground avian eggshell) to 5 L/1 kg (ground avian eggshell), and more preferably 1.0 L/1 kg (ground avian eggshell) to 3.0 L/1 kg (ground avian eggshell). According to one embodiment, the bleaching agent is used in form of an aqueous solution, wherein the bleaching agent is present in the aqueous solution in a concentration of from 0.01 to 5 mol/L, preferably from 0.1 to 2 mol/L, more preferably from 0.25 to 1.5 mol/L, and most preferably from 0.5 to 1 mol/L, and the bleaching agent is used in an amount of in the range of 0.1 L/1 kg (ground avian eggshell) to 10 L/1 kg (ground avian eggshell), preferably 0.5 L/1 kg (ground avian eggshell) to 5 L/1 kg (ground avian eggshell), and more preferably 1.0 L/1 kg (ground avian eggshell) to 3.0 L/1 kg (ground avian eggshell).

Treating step e) may be carried out by mixing the ground avian eggshell obtained in step d) in solid form or in form of an aqueous suspension with the bleaching agent, preferably provided in form of an aqueous solution. For example, treating step e) may be carried out by mixing the ground avian eggshell obtained in step d) in solid form, preferably in form of a filter cake, with the bleaching agent provided in form of an aqueous solution.

Treating step e) may be carried out at a specific temperature. According to one embodiment, the treatment of step e) is carried out at a temperature in the range of from 10 to 90°C, preferably from 20 to 80°C, and more preferably from 50 to 75°C.

According to a preferred embodiment, step e) refers to treating the ground avian eggshell obtained in step d) with a bleaching agent,
wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof, and
wherein the treatment of step e) is carried out at a temperature in the range of from 20 to 80°C, and preferably from 50 to 75°C.

According to a preferred embodiment, step e) refers to treating the ground avian eggshell obtained in step d) with a bleaching agent,
wherein the ground avian eggshell is obtained in step d) in solid form,
wherein the bleaching agent is provided in form of an aqueous solution,
wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof.

According to a preferred embodiment, step e) refers to treating the ground avian eggshell obtained in step d) with a bleaching agent,
wherein the ground eggshell is obtained in step d) in solid form,
wherein the bleaching agent is provided in form of an aqueous solution,
wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof, and
wherein the treatment of step e) is carried out at a temperature in the range of from 20 to 80°C, and preferably from 50 to 75°C.

According to a preferred embodiment, step e) refers to treating the ground avian eggshell obtained in step d) with a bleaching agent,
wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof,
wherein the treatment of step e) is carried out at a temperature in the range of from 20 to 80°C, and preferably from 50 to 75°C, and
wherein the bleaching agent is used in form of an aqueous solution, wherein the bleaching agent is present in the aqueous solution in a concentration of from 0.01 to 5 mol/L, preferably from 0.1 to 2 mol/L, more preferably from 0.25 to 1.5 mol/L, and most preferably from 0.5 to 1 mol/L, and the bleaching agent is used in an amount of in the range of 0.1 L/1 kg (ground avian eggshell) to 10 L/1 kg (ground avian eggshell), preferably 0.5 L/1 kg (ground avian eggshell) to 5 L/1 kg (ground avian eggshell), and more preferably 1.0 L/1 kg (ground avian eggshell) to 3.0 L/1 kg (ground avian eggshell).

The calcium carbonate-containing material obtained in step e) may have specific physical characteristics. According to one embodiment, the calcium carbonate-containing material obtained in step e) has a weight-median particle size *d*₅₀ of from 0.5 to 10 µm, preferably from 1.0 to 7 µm, and more preferably from 2.5 to 5 µm, and/or the calcium carbonate-containing material obtained in step e) has a weight top cut particle size *d*₉₈ of from 2.0 to 40 µm, preferably from 5.0 to 35 µm, and more preferably from 10 to 25 µm, and/or the calcium carbonate-containing material obtained in step e) has a specific surface area of from 0.5 to 20 m²/g, preferably of from 1 to 15 m²/g, and more preferably of from 2 to 10 m²/g, measured using nitrogen and the BET method.

According to one embodiment, the calcium carbonate-containing material obtained in step e) has a weight-median particle size *d*₅₀ of from 0.5 to 10 µm, preferably from 1.0 to 7 µm, and more preferably from 2.5 to 5 µm. According to one embodiment, the calcium carbonate-containing material obtained in step e) has a weight top cut particle size *d*₉₈ of from 2.0 to 40 µm, preferably from 5.0 to 35 µm, and more preferably from 10 to 25 µm. According to one embodiment, the calcium carbonate-containing material obtained in step e) has a specific surface area of from 0.5 to 20 m²/g, preferably of from 1 to 15 m²/g, and more preferably of from 2 to 10 m²/g, measured using nitrogen and the BET method.

According to another embodiment, the calcium carbonate-containing material obtained in step e) has a weight-median particle size *d*₅₀ of from 0.5 to 10 µm, preferably from 1.0 to 7 µm, and more preferably from 2.5 to 5 µm, and the calcium carbonate-containing material obtained in step e) has a weight top cut particle size *d*₉₈ of from 2.0 to 40 µm, preferably from 5.0 to 35 µm, and more preferably from 10 to 25 µm.

The calcium carbonate -containing material obtained in step e) may have a specific physical characteristics. According to one embodiment, the calcium carbonate-containing material obtained in step e) has a weight-median particle size *d*₅₀ of from 0.5 to 10 µm, preferably from 1.0 to 7 µm, and more preferably from 2.5 to 5 µm, and the calcium carbonate-containing material obtained in step e) has a weight top cut particle size *d*₉₈ of from 2.0 to 40 µm, preferably from 5.0 to 35 µm, and more preferably from 10 to 25 µm, and the calcium carbonate-containing material obtained in step e) has a specific surface area of from 0.5 to 20 m²/g, preferably of from 1 to 15 m²/g, and more preferably of from 2 to 10 m²/g, measured using nitrogen and the BET method.

### • Optional additional steps of the inventive process

The process according to the present invention may comprise additional process steps.

According to one embodiment, the inventive process further comprises a step e2) of separating the calcium carbonate-containing material from the mixture obtained in step e).

The separation according to step e2) may be carried out by conventional separating methods such as sieving, a hydrocyclone process, filtration, centrifugation, decanting, evaporation or combinations thereof. According to one embodiment, the separation according to step e2) may be carried out by conventional separating methods such as sieving, a hydrocyclone process, filtration, centrifugation, decanting, evaporation or combinations thereof, preferably by filtration.

According to one embodiment, the inventive process further comprises a step e3) of re-suspending the calcium carbonate-containing material obtained in step e2) in form of an aqueous suspension, preferably in form of a slurry. A "slurry" in the meaning of the present invention refers to an aqueous suspension having a solids content, e.g. calcium carbonate-containing material, of 30.0 to 78.0 wt.-%, more preferably from 40.0 to 78.0 wt.-% and most preferably from 45.0 to 78.0 wt.-%, based on the total weight of the aqueous suspension. According to one preferred embodiment, the aqueous suspension, preferably slurry, according to step e3) comprising the calcium carbonate-containing material obtained in step e) has a content of calcium carbonate -containing material of 30.0 to 78.0 wt.-%, more preferably from 40.0 to 78.0 wt.-% and most preferably from 45.0 to 78.0 wt.-%, based on the total weight of the aqueous suspension.

According to one embodiment, further components are added to the aqueous suspension, preferably slurry, according to step e3). According to one embodiment, the aqueous suspension, preferably slurry, according to step e3) comprises further components selected from the group consisting of dispersing agents, thickeners, disinfectants, biocides, stabilizers, pigments, binders and mixtures thereof. According to a preferred embodiment, the aqueous suspension, preferably slurry, according to step e3) comprises a dispersing agent and a thickener.

Furthermore, the inventive process may further comprise a step f) of grinding the calcium carbonate-containing material obtained in any one of steps e) to e3) preferably the aqueous suspension obtained in step e3). According to one embodiment, the process comprises a grinding step f) of grinding an aqueous suspension comprising the calcium carbonate-containing material obtained in step e).

According to a preferred embodiment, the grinding according to step f) is carried out in the presence of a grinding medium.

The grinding medium is not limited to a specific grinding medium as long as the grinding medium is suitable for grinding the calcium carbonate-containing material. Preferably, the grinding medium is selected from the group consisting of metallic grinding media and non-metallic grinding media. Suitable metallic grinding media is, for example, made of carbon steel, forged steel, stainless steel or chrome steel. Suitable non-metallic grinding media is, for example, made of alumina, ceramics, glass, silicon carbide or zirconium oxide. Preferably, the grinding medium is a non-metallic grinding medium. Most preferably, the grinding medium is a ceramic grinding medium.

The size of the grinding medium will be selected by the skilled person according to the type of grinding medium and/or grinding equipment used for the grinding step f). According to one embodiment, the grinding medium has a size in the range of 100 µm to 10 mm, preferably in the range of 500 µm to 8 mm, more preferably 1 to 4 mm.

The amount of grinding medium used per kg of calcium carbonate-containing material may be varied by the skilled person according to the requirements of the grinding medium and/or grinding equipment. In one embodiment, the grinding medium is used in an amount of ranging from 0.5 kg (grinding medium)/ 1kg (calcium carbonate-containing material) to 10 kg (grinding medium)/ 1kg (calcium carbonate-containing material), preferably from 1 kg (grinding medium)/ 1kg (calcium carbonate-containing material) to 8 kg (grinding medium)/ 1kg (calcium carbonate-containing material), and more preferably from 2 kg (grinding medium)/ 1kg (calcium carbonate-containing material) to 5 kg (grinding medium)/ 1kg (calcium carbonate-containing material).

The grinding according to step f) may be carried out in any grinding mill, which is suitable for grinding calcium carbonate-containing material. For example, the grinding according to step f) may be carried out in autogenous mill, a semi-autogenous mill, a ball mill, an attrition mill or a sand mill. Preferably, the grinding according to step f) is carried out in a ball mill, an attrition mill or a sand mill. In a preferred embodiment of the present invention, the grinding according to step f) is carried out in a sand mill, more preferably in a continuous sand mill.

According to one preferred embodiment, the grinding according to step b) is carried out in a sand mill using ceramic grinding medium having a size in the range of 1 to 4 mm, wherein the grinding medium is used in an amount of ranging from 2 kg (grinding medium)/ 1kg (calcium carbonate-containing material) to 5 kg (grinding medium)/ 1kg (calcium carbonate-containing material).

According to one preferred embodiment, the grinding according to step f) is carried out in a sand mill using a grinding media, preferably a ceramic grinding media, at a sandmill speed of 0.1 to 20 m/s, preferably 1 to 10 m/s, and more preferably 3 to 8 m/s. For example, the grinding according to step f) may be carried out in a sand mill using a grinding media, preferably a ceramic grinding media, at a sandmill speed of 6.3 m/s.

According to one embodiment, the calcium carbonate-containing material obtained in grinding step f) has a weight-median particle size *d*₅₀ of from 0.5 to 8 µm, preferably from 0.8 to 5 µm, and more preferably from 1.0 to 3 µm, and/or the calcium carbonate-containing material obtained in grinding step f) has a weight top cut particle size *d*₉₈ of from 1.0 to 25 µm, preferably from 1.5 to 20 µm, and more preferably from 2 to 10 µm. According to one embodiment, the calcium carbonate-containing material obtained in grinding step f) has a weight-median particle size *d*₅₀ of from 0.5 to 8 µm, preferably from 0.8 to 5 µm, and more preferably from 1.0 to 3 µm. According to one embodiment, the calcium carbonate-containing material obtained in grinding step f) has a weight top cut particle size *d*₉₈ of from 1.0 to 25 µm, preferably from 1.5 to 20 µm, and more preferably from 2 to 10 µm.

According to one preferred embodiment, the calcium carbonate-containing material obtained in grinding step f) has a weight-median particle size *d*₅₀ of from 0.5 to 8 µm, preferably from 0.8 to 5 µm, and more preferably from 1.0 to 3 µm, and the calcium carbonate-containing material obtained in grinding step f) has a weight top cut particle size *d*₉₈ of from 1.0 to 25 µm, preferably from 1.5 to 20 µm, and more preferably from 2 to 10 µm.

The inventive process described herein represents one way of preparing the inventive product described herein. Therefore, the embodiments described for the inventive product may refer to the calcium carbonate-containing product obtained in any one of step e), e2), e3) or f).

### • Further embodiments of the inventive process

According to one preferred embodiment, the process for preparing a calcium carbonate-containing material comprises the steps of:
a) providing a pre-treated avian eggshell, wherein the pre-treated avian eggshell according to step a) is a pre-treated white eggshell of a chicken,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 50 µm,
c) treating the pre-treated avian eggshell during step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
d) optionally separating the ground avian eggshell from the aqueous suspension obtained in step b),
e) treating the ground avian eggshell obtained in step c), or in optional step d), with a bleaching agent, wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof.

According to one preferred embodiment, the process for preparing a calcium carbonate-containing material comprises the steps of:
a) providing a pre-treated avian eggshell, wherein the pre-treated avian eggshell according to step a) is a pre-treated white eggshell of a chicken,
b) grinding an aqueous suspension comprising the pre-treated avian eggshell of step a) to obtain an aqueous suspension comprising a ground eggshell having a weight-median particle size *d*₅₀ of from 0.5 to 10 µm, and/or a weight top cut particle size *d*₉₈ of from 2.0 to 40 µm,
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
d) optionally separating the ground avian eggshell from the aqueous suspension obtained in step c),
e) treating the ground avian eggshell obtained in step c), or in optional step d), with a bleaching agent, wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof.

According to one preferred embodiment, the process for preparing a calcium carbonate-containing material comprises the steps of:
a) providing a pre-treated avian eggshell, wherein the pre-treated avian eggshell according to step a) is a pre-treated white eggshell of a chicken,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm,
   wherein the grinding is carried out in the presence of grinding media, preferably non-metallic grinding media, more preferably ceramic grinding media,
c) treating the pre-treated avian eggshell during step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
d) optionally separating the ground avian eggshell from the aqueous suspension obtained in step b),
e) treating the ground avian eggshell obtained in step c), or in optional step d), with a bleaching agent, wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof.

According to one preferred embodiment, the process for preparing a calcium carbonate-containing material comprises the steps of:
a) providing a pre-treated avian eggshell, wherein the pre-treated avian eggshell according to step a) is a pre-treated white eggshell of a chicken,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm, wherein the grinding is carried out in the presence of grinding media, preferably non-metallic grinding media, more preferably ceramic grinding media,
c) treating the ground avian eggshell after step b) with a base, wherein the base is a base selected from the group consisting of hydroxide salts, ammonia, PO₄³⁻ salts, CO₃²⁻ salts and mixtures thereof, preferably the base is potassium hydroxide and/or sodium hydroxide,
d) optionally separating the ground avian eggshell from the aqueous suspension obtained in step c),
e) treating the ground avian eggshell obtained in step c), or in optional step d), with a bleaching agent, wherein the bleaching agent is selected from the group consisting of percarbonate salts, perborate salts, peroxy acids, hydrogen peroxide, hypochlorite salts and mixtures thereof, preferably selected from the group consisting of hypochlorite salts and mixtures thereof.

### The paint formulation according to the present invention

According to one aspect of the present invention, a paint formulation is provided, which comprises the calcium carbonate-containing material according to the present invention.

The paint formulation may be a solid paint formulation or a liquid, preferably aqueous, paint formulation. It is preferred that the paint formulation is an aqueous paint formulation.

According to one embodiment, the aqueous paint formulation comprises the calcium carbonate-containing material in an amount of 1 to 99 wt.%, preferably 15 to 90 wt.%, more preferably 25 to 80 wt.%, most preferably from 25 to 65 wt.%, based on the total weight of the aqueous paint formulation.

Depending on the purpose of the aqueous paint formulation, the aqueous paint formulation may comprise a higher amount of the inventive calcium carbonate-containing material or a lower amount of the inventive calcium carbonate-containing material. According to one preferred embodiment, the aqueous paint formulation comprises the calcium carbonate-containing material in an amount of 50 to 70 wt.%, based on the total weight of the aqueous paint formulation. According to another preferred embodiment, the aqueous paint formulation comprises the calcium carbonate-containing material in an amount of 30 to 50 wt.%, based on the total weight of the aqueous paint formulation.

According to one embodiment, the aqueous paint formulation has a solids content in the range of from 1 to 99 wt.%, preferably from 30 to 70 wt.%, more preferably from 40 to 70 wt.%, based on the total weight of the aqueous paint formulation.

According to one embodiment, the aqueous paint formulation has a pigment volume concentration (PVC) in the range of from 1 to 99, and preferably from 15 to 90.

The aqueous paint formulation may have a low, medium or high pigment volume concentration (PVC). According to one embodiment, the aqueous paint formulation has a pigment volume concentration (PVC) in the range of from 5 to 50. According to one preferred embodiment, the aqueous paint formulation has a pigment volume concentration (PVC) in the range of from 50 to 75. According to another preferred embodiment, the aqueous paint formulation has a pigment volume concentration (PVC) in the range of from 70 to 90.

The aqueous paint formulation may comprise further components in addition to the calcium carbonate-containing material according to the present invention. According to one embodiment, the aqueous paint formulation further comprises one or more components selected from the group consisting of bases, water softener, rheology modifier, dispersing agents, anti-foaming agents, coalescent agents, biocides, pigments and fillers.

According to one embodiment, the aqueous paint formulation further comprises a pigment, preferably titanium dioxide.

According to one embodiment, the aqueous paint formulation comprises the calcium carbonate-containing material in an amount of from 1 to 99 wt.%, preferably from 15 to 90 wt.%, more preferably from 25 to 80 wt.%, most preferably from 25 to 65 wt.%, and a pigment, preferably titanium dioxide, in an amount of from 0.01 to 20 wt.%, preferably from 1 to 15 wt.%, based on the total weight of the aqueous paint formulation.

According to one embodiment, the aqueous paint formulation comprises the calcium carbonate-containing material in an amount of from 1 to 99 wt.%, preferably from 15 to 90 wt.%, more preferably from 25 to 80 wt.%, most preferably from 25 to 65 wt.%, and a pigment, preferably titanium dioxide, in an amount of from 0.01 to 20 wt.%, preferably from 1 to 15 wt.%, based on the total weight of the aqueous paint formulation, and the aqueous paint formulation has a pigment volume concentration (PVC) in the range of from 1 to 99, and preferably from 15 to 90.

According to one preferred embodiment, the aqueous paint formulation comprises the calcium carbonate-containing material in an amount of from 50 to 70 wt.%, and a pigment, preferably titanium dioxide, in an amount of from 0.01 to 10 wt.%, preferably from 0.1 to 7.5 wt.%, more preferably from 0.5 to 5 wt.%, and most preferably from 1 to 3 wt.%, based on the total weight of the aqueous paint formulation.

According to another preferred embodiment, the aqueous paint formulation comprises the calcium carbonate-containing material in an amount of from 25 to 50 wt.%, and a pigment, preferably titanium dioxide, in an amount of from 1 to 20 wt.%, preferably from 2 to 15 wt.%, more preferably from 5 to 15 wt.%, and most preferably from 7.5 to 15 wt.%, based on the total weight of the aqueous paint formulation.

According to one preferred embodiment, the aqueous paint formulation comprises the calcium carbonate-containing material in an amount of from 50 to 70 wt.%, and a pigment, preferably titanium dioxide, in an amount of from 0.01 to 10 wt.%, preferably from 0.1 to 7.5 wt.%, more preferably from 0.5 to 5 wt.%, and most preferably from 1 to 3 wt.%, based on the total weight of the aqueous paint formulation, and the aqueous paint formulation has a pigment volume concentration (PVC) in the range of from 70 to 90.

According to another preferred embodiment, the aqueous paint formulation comprises the calcium carbonate-containing material in an amount of from 25 to 50 wt.%, and a pigment, preferably titanium dioxide, in an amount of from 1 to 20 wt.%, preferably from 2 to 15 wt.%, more preferably from 5 to 15 wt.%, and most preferably from 7.5 to 15 wt.%, based on the total weight of the aqueous paint formulation, and the aqueous paint formulation has a pigment volume concentration (PVC) in the range of from 50 to 75.

The aqueous paint formulation may have a specific pH value. According to one embodiment, the aqueous paint formulation has a pH value in the range of from 7 to 12, preferably from 8 to 11, more preferably from 9 to 10.

The aqueous paint formulation may further have specific optical properties such as coverage and/or opacity, or brightness.

The coverage and/or opacity of the aqueous paint formulation may be described by its yield for a specific contrast ratio, i.e. the surface which can be covered per liter paint while obtaining a specific contrast ratio. According to one embodiment, the aqueous paint formulation has a yield for a contrast ratio of 0.98 in the range of from 1 to 15 m² (surface)/L(paint), preferably 3 to 12 m² (surface)/L(paint), more preferably 7 to 10 m² (surface)/L(paint). The yield may be determined according to the International Standard ISO 6504-3, Method B (black and white charts method).

According to one embodiment, the aqueous paint formulation comprises the calcium carbonate-containing material in an amount of from 1 to 99 wt.%, preferably from 15 to 90 wt.%, more preferably from 25 to 80 wt.%, most preferably from 25 to 65 wt.%, and a pigment, preferably titanium dioxide, in an amount of from 0.01 to 20 wt.%, preferably from 1 to 15 wt.%, based on the total weight of the aqueous paint formulation, and wherein the aqueous paint formulation has a yield for a contrast ratio of 0.98 in the range of from 1 to 15 m² (surface)/L(paint), preferably 3 to 12 m² (surface)/L(paint), more preferably 7 to 10 m² (surface)/L(paint).

According to one preferred embodiment, the aqueous paint formulation comprises the calcium carbonate-containing material in an amount of from 50 to 70 wt.%, and a pigment, preferably titanium dioxide, in an amount of from 0.01 to 10 wt.%, preferably from 0.1 to 7.5 wt.%, more preferably from 0.5 to 5 wt.%, and most preferably from 1 to 3 wt.%, based on the total weight of the aqueous paint formulation, and wherein the aqueous paint formulation has a yield for a contrast ratio of 0.98 in the range of from 1 to 15 m² (surface)/L(paint), preferably 3 to 12 m² (surface)/L(paint), more preferably 7 to 10 m² (surface)/L(paint).

According to another preferred embodiment, the aqueous paint formulation comprises the calcium carbonate-containing material in an amount of from 25 to 50 wt.%, and a pigment, preferably titanium dioxide, in an amount of from 1 to 20 wt.%, preferably from 2 to 15 wt.%, more preferably from 5 to 15 wt.%, and most preferably from 7.5 to 15 wt.%, based on the total weight of the aqueous paint formulation, and wherein the aqueous paint formulation has a yield for a contrast ratio of 0.98 in the range of from 1 to 15 m² (surface)/L(paint), preferably 3 to 12 m² (surface)/L(paint), more preferably 7 to 10 m² (surface)/L(paint).

According to one preferred embodiment, the aqueous paint formulation comprises the calcium carbonate-containing material in an amount of from 50 to 70 wt.%, and titanium dioxide in an amount of from 0.5 to 5 wt.%, and preferably from 1 to 3 wt.%, based on the total weight of the aqueous paint formulation, and wherein the aqueous paint formulation has a yield for a contrast ratio of 0.98 in the range of 7 to 10 m² (surface)/L(paint).

According to another preferred embodiment, the aqueous paint formulation comprises the calcium carbonate-containing material in an amount of from 25 to 50 wt.%, and titanium dioxide in an amount of from 5 to 15 wt.%, and preferably from 7.5 to 15 wt.%, based on the total weight of the paint, and wherein the aqueous paint formulation has a yield for a contrast ratio of 0.98 in the range of from 7 to 10 m² (surface)/L(paint).

According to one embodiment, the aqueous paint formulation has
i) a brightness from 90 to 100%, preferably from 90 to 94%, according to R457, and/or
ii) L* from 95 to 100, preferably from 95 to 98, according to DIN 6174, and/or
iii) a* from -5 to 5, preferably from -2 to 2, more preferably from -1 to 0, according to DIN 6174, and/or
iii) b* from 0 to 10, preferably from 1 to 5, more preferably from 1 to 2, according to DIN 6174.

According to one embodiment, the aqueous paint formulation has
i) a brightness from 90 to 100%, preferably from 90 to 94%, according to R457, and
ii) L* from 95 to 100, preferably from 95 to 98, according to DIN 6174, and
iii) a* from -5 to 5, preferably from -2 to 2, more preferably from -1 to 0, according to DIN 6174, and
iii) b* from 0 to 10, preferably from 1 to 5, more preferably from 1 to 2, according to DIN 6174.

### The use according to the present invention

One aspect of the present invention refers to the use of the calcium carbonate-containing material according to the invention in a paint formulation. It is to be understood that the use of the inventive product "in a paint formulation" means that the inventive product is used a raw material for preparing a paint formulation.

The inventors have surprisingly found that the use of the inventive product as described herein in a paint formulation has several advantages. For example, the use of the inventive product can improve the optical properties of a paint formulation such as the coverage and/or opacity. Due to its characteristics, the use of the inventive product can allow for reducing the amount or replacing other more expensive raw materials and/or pigments in a paint formulation such as titanium dioxide without negatively effecting the properties of the paint.

According to one embodiment, the calcium carbonate-containing material is used in a paint formulation as a filler and/or pigment.

According to one embodiment, the calcium carbonate-containing material is used in a paint formulation as a filler. A "filler" in the meaning of the present invention is a solid substance used in a paint for providing volume and/or texture to the paint, lower the cost of a paint by substituting and/or reducing more costly raw materials in the paint.

According to one embodiment, the calcium carbonate-containing material is used in a paint formulation as a pigment. A "pigment" in the meaning of the present invention is a solid substance used in a paint for providing opacity and/or colour to the paint.

According to one embodiment, the calcium carbonate-containing material is used in a paint formulation as a filler and pigment.

According to one embodiment, the calcium carbonate-containing material is used for improving the optical properties of a paint formulation, preferably for increasing the brightness, opacity, and/or coverage of a paint formulation, more preferably for increasing the opacity, and/or coverage of a paint formulation. According to one embodiment, the calcium carbonate-containing material is used for increasing the opacity and/or coverage of a paint formulation.

According to one embodiment, the calcium carbonate-containing material is used for et least partially replacing a raw material in a paint formulation, preferably a filler and/or pigment, preferably ground calcium carbonate (GCC) or titanium dioxide. The raw material may be partially or fully replaced by the inventive calcium carbonate-containing material. The term "replacing" does not specify the amount of inventive product with which the raw material in the paint is replaced. In other words, the raw material can be replaced by the exact same amount of the inventive product, but that also with half, double, triple etc. the amount of the inventive product.

According to one embodiment, the calcium carbonate-containing material is used for partially or fully replacing a raw material in a paint formulation, preferably a filler and/or pigment, preferably ground calcium carbonate (GCC) or titanium dioxide.

According to one embodiment, the calcium carbonate-containing material is used for at least partially replacing a filler in a paint formulation, preferably a calcium carbonate-containing filler, preferably ground calcium carbonate and/or precipitated calcium carbonate, and more preferably ground calcium carbonate. According to one embodiment, the calcium carbonate-containing material is used for fully replacing a filler in a paint formulation, preferably a calcium carbonate-containing filler, preferably ground calcium carbonate and/or precipitated calcium carbonate, and more preferably ground calcium carbonate.

According to one embodiment, the calcium carbonate-containing material is used for partially replacing a calcium carbonate-containing filler in a paint formulation, preferably ground calcium carbonate and/or precipitated calcium carbonate.

According to one embodiment, the calcium carbonate-containing material is used for at least partially replacing a pigment in a paint formulation, preferably a calcium carbonate-containing pigment or titanium dioxide, more preferably ground calcium carbonate, precipitated calcium carbonate and/or titanium dioxide, and most preferably titanium dioxide.

According to one embodiment, the calcium carbonate-containing material is used for partially or fully, preferably partially, replacing titanium dioxide in a paint formulation. According to one embodiment, the calcium carbonate-containing material is used for replacing from 0.1 to 100 wt.%, preferably from 1 to 80 wt.%, more preferably from 30 to 70 wt.%, even more preferably of from 40 to 60 wt.%, of the titanium dioxide in a paint formulation, based on the total weight of the paint formulation.

### Examples

### 1. Measuring Methods

### Optical parameters:

Optical parameters L/a/b or L*/a*/b* were measured according to DIN 6174.

Brightness was measured according to R457.

The optical parameters of the inventive calcium carbonate-containing material were measured for a powder obtained by the drying of an aqueous suspension consisting of water, 70 wt.% of the inventive calcium carbonate-containing material, 0.15 wt.% of a sodium polyacrylate-type dispersant, and 0.1 wt.% of a cellulosic thickener, based on the total weight of the suspension. The cellulosic thickener used was a ethylhydroxiethyl cellulose which gave a viscosity of 5750 mPa s when dissolved in water at 1% and the viscosity was measured at 20 °C with a Brookfield LV viscometer.

The optical properties were measured by using a Datacolor SF600 Plus-CT. The slurry was first dried in a laboratory drying balance A&D MX50 at 140°C until the weight loss was less than 0.05% for 1 minute. After cooling the dried tablet powder, a Retsch ZM200 ultracentrifugal mill equipped with a 200 micron sieve was used to deagglomerate the powder. This deagglomerated powder was then pressed into a tablet (proprietary press system) and the tablet was subjected to the analysis in the Datacolor SF600 Plus-CT equipment.

The brightness of the pre-treated eggshell was measured by taking the pre-treated eggshell without inner membrane, grinding it in a Retsch ZM200 ultracentrifugal mill equipped with a 200 micron sieve, pressing the obtained powder into a tablet (proprietary press system) and measuring the tablet optical properties in a Datacolor SF600 Plus-CT equipment.

The yield of the paint formulation was determined according to the International Standard ISO 6504-3, Method B (black and white charts method).

### Residual amount of organic matter:

Organic matter was measured by heating the respective material (e.g. the pre-treated eggshell or the inventive product) up to 400°C for 1 hour. After, the samples were cooled in a desiccator and the weight loss of the material was measured. The organic matter was defined as the loss of mass, i.e. mass of material (before) - mass of material (after).

### Masses:

All masses above 100 g were weighted in a AND EK-6100 I lab scale to the nearest 0.1 g.

### 2. Calcium Carbonate-Containing Products

### Inventive Example 1:

### Step a):

In an initial step, the inner membrane of the chicken eggshells was removed. Removal of the inner membrane was achieved by a coarse grinding process followed by decanting. The chicken eggshells were coarse ground down to 1-2 mm (using for that a screen of 2.5 mm), wherein the membrane was separated and then several washes were carried out to remove the membrane by decantation. The coarse grinding was carried out on a pilot scale with a pin mill (Forplex F0 from Poittemill - Forplex). The raw chicken eggshell was fed to the pin mill at an approximate flowrate of 40 kg/h. At the same time, water was fed at an approximate flowrate of 150 kg/h. The eggshell in the resulting mixture was decanted and washed three times with water to remove as much as possible of the remaining membrane. In the final rinse with water, a small amount of sodium hypochlorite was added to prevent bacterial growth. After, the eggshell was dried at room temperature.

The dried eggshell was then fed to a Retsch ZM 200 high speed laboratory mill working at 18000 revolutions per minute and using a 0.2 mm screen. The ground eggshell was sieved using a 250 µm sieve from Retsch. The oversize particles that were retained in the sieve were again passed in the same Retsch mill and sieved again at the 250 µm.

### Steps b) and c):

3075 g of Bitossi 3-5 mm spheres (grinding media), 438 g of the pre-treated eggshell from step a) and 593 g of aqueous NaOH (with concentration of 2.5% (m/v) -obtained after dilution of 25% NaOH (supplier - SPD) with water) were added into a 3L sandmill. The mixture was ground for 7 min with the sandmill speed at 6.3 m/s, to obtain particles with around 3.5-4.5 microns of weight-median particle size d₅₀ (values measured in a Micromeritics SediGraph III).

### Step d):

The slurry was separated from the grinding media and was filtered with a paper filter made by Whatman, model 542, with the help of a vacuum water jet pump.

### Step e):

The solids content of the cake obtained in step d) was measured in a drying balance AND MX50. An equivalent dry weigh of 200 g of the cake was weighed.

320 mL of commercial bleach (with approximately 3% of the NaOCl) were heated in a water bath until 60°C and the previously weighted eggshell cake was added to the bleach. The mixture was stirred for 20 min at 700 rpm (IKA EUROSTAR 200 control).

The bleached mixture was filtered with paper filter Whatman 542 with the help of the vacuum water jet pump. The cake was washed with water at room temperature (approximately 1L of wash water) to obtain the inventive calcium carbonate-containing product.

Then, the solids content of the cake was measured in a drying balance AND MX50. An equivalent dry weigh of 500 g of the inventive calcium carbonate-containing product was weighed. 214.3 g of room temperature water was added to obtain a slurry (slurry of IE1) with approximately 70% of solids content. 1.6667 g of a polyacrylate dispersant and 402 mg of a thickener were added, and the slurry was mixed.

The obtained slurry comprised the inventive calcium carbonate-containing product having a weight-median particle size d₅₀ of around 3.8 micron, and a particle size d₃₂ below 2 micron (values measured in a Micromeritics SediGraph III).

The obtained slurry had a R457 brightness of 93.41%, L* of 98.5, a* of -0.08, b* of 2.08 and y of 3.80. The inventive product has very good optical properties, and especially a high brightness R457 and a high whiteness L*.

### Inventive Example 2:

### Step a):

The pre-treated chicken eggshell obtained in step a) of inventive example 1 was also used for inventive example 2.

### Steps b) and c):

3075 g of Bitossi 3-5 mm spheres, 438 g of the pre-treated eggshell from step a) and 593 g of aqueous NaOH (with concentration of 2.5% (m/v) -obtained after dilution of 25% NaOH (supplier - SPD) with water) were added into a 3L sandmill. The mixture was ground for 7 min with the sandmill speed at 6.3 m/s, to obtain particles with around 3.5-4.5 microns of weight-median particle size d₅₀ (values measured in a Micromeritics SediGraph III).

### Step d):

The slurry was separated from the grinding media and was filtered with a paper filter made by Whatman, model 542, with the help of a vacuum water jet pump.

### Step e):

The solids content of the cake was measured in a drying balance AND MX50. An equivalent dry weigh of 250 g of the cake was weighed.

400 mL of commercial bleach (with approximately 3% of the NaOCl) was heated in a water bath until 60°C. The bleach was added to the previously weighed eggshell cake. The mixture was stirred for 20 min at 700 rpm (IKA EUROSTAR 200 control).

The mixture was filtered with a paper filter Whatman 542 using the help of the vacuum water jet pump to obtain the inventive calcium carbonate-containing material. The calcium carbonate-containing material was washed with water at room temperature (approximately 1L of wash water).

### Step f):

2750 g of Bitossi 1.5-2.5 mm spheres, 845 g of the inventive calcium carbonate-containing product, 362 g of water at room temperature and 8.8947 g of the polyacrylate dispersant were weighed into a 3L sandmill.

The mixture was ground for 10 min in the sandmill with a speed of the 6.3 m/s, to obtain an inventive product having a weight-median particle size of around 1.4 micron, and a particle size d₆₂ of below a 2 micron (values measured in a Micromeritics SediGraph III). The slurry was separated from the grinding medium and 75 ppm and 2000 ppm of a disinfectant and biocide, respectively, were added.

The obtained slurry had a R457 brightness of 95.32%, L* of 98.8, a* of -0.11, b* of 1.22 and y of 2.18. The inventive product has very good optical properties, and especially a high brightness R457 and a high whiteness L*.

### Comparative Example 1:

Comparative Example 1 refers to a treatment of eggshell according to the prior art.

Step 1): Brown eggshell was passed through a centrifuge to remove remaining yolk and white.

Step 2): The eggshell was passed through a rotary pin mill and the liberated membrane was separated by decanting with water.

Step 3): 250 ppm of sodium hypochorite was added and left with the eggshell for 5 minutes.

Step 4): The eggshell was washed with water until no hypochlorite smell was present, and dried.

Step 5): 507 mL of NaOH 2.5% was added to 135 g of eggshell; this suspension was boiled for 25 minutes.

Step 6): The liquid was decanted from the eggshell; the eggshell was washed with boiling water.

Step 7): The eggshell was washed (2x) with a weak solution of acid and decanted after.

Step 8): The obtained eggshell was ground in an agitated media mill with alumina beads for 5 minutes.

Table 1 shows optical and physical properties of a slurry according to comparative example 1.

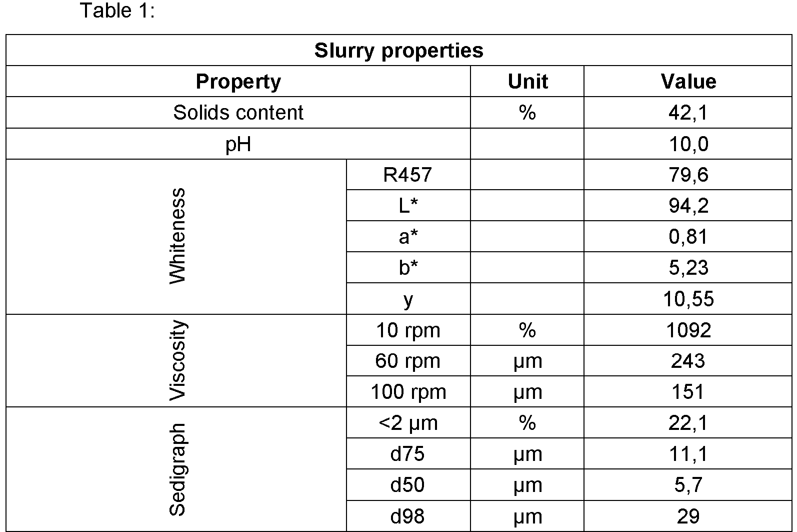

The data in Table 1 shows that the brightness (R457) of the product according to comparative example 1 is significantly lower (below 80) than the brightness of either one of the products from inventive examples 1 and 2. Furthermore, the product according to comparative example 1 also has a lower whiteness L (below 95) than the products of inventive examples 1 and 2.

### 3. Paints

Inventive paints 1 to 8 (IP 1 to 8) were prepared from the slurry of inventive calcium carbonate-containing material according to inventive example 1 (IE 1).

Comparative paints 1 and 2 (CP 1 and 2) were prepared from a commercial slurry (70% SC) of ground calcium carbonate (GCC I) having a top cut particle size d₉₈ of 27 µm and a weight-median particle size d₅₀ of 3.6 µm, comparative paints 3 to 5 (CP 3 to 5) and 9 to 10 (CP9 to CP10) were prepared from a commercial slurry (72% SC) of ground calcium carbonate (GCC II) having a top cut particle size of *d*₉₈ of 15.0 µm and a weight-median particle size d₅₀ of 3.4 µm, and comparative paints 6 to 8 (CP6 to CP8) were prepared from a commercial dry product of ground calcium carbonate (GCC III) having a top cut particle size *d*₉₈ of 12.0 µm and weight-median particle site d₅₀ of 2.5 µm.

Table 2 shows the components of inventive paint 1 (IP 1) and comparative paint 1 (CP 1). IP 1 contains 43 wt.% of the slurry prepared in inventive example 1 (IE 1) and CP 1 contains 43 wt.% of the commercial GCC slurry (GCC I).

**Table 2: Medium PVC paint formulations**

| | **IP 1** | **CP 1** |
|---|---|---|
| **Additive** | **% (w/w)** | **% (w/w)** |
| Water | 19.58 | 19.58 |
| Calgon 10% | 0.5 | 0.5 |
| Bermocoll EBM 5500 | 0.3 | 0.3 |
| NaOH 5% | 0.17 | 0.17 |
| Dispersant M1227 | 0.25 | 0.25 |
| Antifoam | 0.25 | 0.25 |
| TiO₂ | 13.5 | 13.5 |
| Talco W8 | 3.5 | 3.5 |
| Iceberg | 3 | 3 |
| Thor MBL | 0.2 | 0.2 |
| Slurry GCC (GCC I) 70% SC | 0 | 43 |
| Slurry of IE 1 70% SC | 43 | 0 |
| Polidisp 7215 | 13 | 13 |
| Antifoam | 0.25 | 0.25 |
| Texanol | 1.5 | 1.5 |
| White Spirit | 0.5 | 0.5 |
| Monopropyleneglycol | 0.5 | 0.5 |
| **Total** | 100 | 100 |

| | | |
|---|---|---|
| Table 3 shows the properties of IP1 and CP1. | | |

The optical properties of the paints were measured on the white part of a black/white card from Leneta, where a film of the paint was applied with a 150 micron applicator and dried for 24 hours.

**Table 3:**

| **Property** | **Unit** | **IP 1** | **CP 1** |
|---|---|---|---|
| Solids content (NP ISO 2811-1) | % | 59.4 | 58.6 |
| Theoretical PVC | % | 72 | |
| pH | | 9.3 | 9.5 |
| Viscosity (Brookfield, spl6, 10 rpm) | cP | 12200 | 12100 |
| Viscosity (Brookfield, spl6, 60 rpm) | cP | 3900 | 4067 |
| Viscosity (Brookfield, spl6, 100 rpm) | cP | 2860 | 2970 |
| Viscosity KU | KU | 103 | 104 |
| L* white (gap 150 µm) | | 96.9 | 96.8 |
| a* white (gap 150 µm) | | -0.70 | -0.64 |
| b* white (gap 150 µm) | | 1.59 | 1.55 |
| R457 white (gap 150 µm) | % | 90.8 | |
| Rx white (gap 150 µm) | % | 92.3 | 91.9 |
| Yield (contrast ratio = 0.98) | m²/L | 8.6 | 7.2 |
| Gloss 85° (gap 150 µm) (NP EN ISO 2815) | GU | 2.7 | 2.6 |
| Water absorption | % | 16 | 15 |
| Wet scrub resistance (ISO 11998) | µm | 4.5 | 4.8 |
| (Film thickness loss) | class | 1 | 1 |

The data in Table 3 shows that IP 1 has a significantly higher yield than CP 1, and therefore has e.g. a better coverage than CP 1.

Table 4 shows the components of inventive paints 2 and 3 (IP 2 and IP 3) and comparative paint 2 (CP 2). IP 2 contains 82.04 wt.% of the slurry prepared in inventive example 1 (IE 1) and CP 2 contains 82.04 wt..% of the commercial GCC slurry. IP 3 contains 84.3 wt.% of the slurry prepared in inventive example 1 (IE 1) and 2.5 wt. % less of TiO₂ than IP 2, i.e. 2.5 wt.% of TiO₂ was replaced in IP 3 with approx. 2.2 wt.% of the slurry prepared in inventive example 1 (IE 1).

**Table 4: High PCV paint formulations**

| | **IP 2** | **IP 3** | **CP 2** |
|---|---|---|---|
| **Additive** | **% (w/w)** | | |
| Water | 5.31 | 4.632 | 5.31 |
| Calgon 10% | 0.28 | 0.28 | 0.28 |
| Bermocoll EBM 5500 | 0.28 | 0.28 | 0.28 |
| NaOH 10% | 0.05 | 0.05 | 0.05 |
| Dispersant M1227 | 0.10 | 0.1 | 0.1 |
| Antifoam | 0.15 | 0.15 | 0.15 |
| TiO₂ | 5.00 | 2.5 | 5 |
| Thor MBL | 0.20 | 0.2 | 0.2 |
| Slurry GCC (GCC I) 70% SC | - | - | 82.04 |
| Slurry of IE 1 70% SC | 82.04 | 84.3 | 0 |
| Arkema 2423 | 6.20 | 6.2 | 6.2 |
| Texanol | 0.24 | 0.24 | 0.24 |
| White Spirit | 0.15 | 0.148 | 0.148 |
| Total | 100.00 | 99.08 | 100 |

| | | | |
|---|---|---|---|
| Table 5 shows the properties of IP2, IP3 and CP2. | | | |

The optical properties of the paints were measured on the white part of a black/white card from Leneta, where a film of the paint was applied with a 150 micron applicator and dried for 24 hours.

**Table 5:**

| **Property** | **Unit** | **IP 2** | **IP 3** | **CP 2** |
|---|---|---|---|---|
| Solids content (NP ISO 2811-1) | % | 67.3 | 66.2 | 65.6 |
| Theoretical PVC | % | 87.9 | 87.9 | |
| pH | | 9.6 | 9.73 | 9.5 |
| Viscosity (Brookfield, spl6, 10 rpm) | cP | 29700 | 22300 | 24000 |
| Viscosity (Brookfield, spl6, 60 rpm) | cP | 9433 | 7567 | 7917 |
| Viscosity (Brookfield, spl6, 100 rpm) | cP | 6790 | 5590 | 5770 |
| Viscosity KU | KU | 133 | 124.5 | 126 |
| L* white (gap 150 µm) | | 96.8 | 96.63 | 96.4 |
| a* white (gap 150 µm) | | -0.60 | -0.54 | -0.48 |
| b* white (gap 150 µm) | | 1.55 | 1.52 | 1.64 |
| R457 white (gap 150 µm) | % | 90.3 | | |
| Rx white (gap 150 µm) | % | 92.0 | 91.7 | 91.1 |
| Yield (contrast ratio = 0.98) | m²/L | 9.8 | 7.1 | 7.2 |
| Gloss 85° (gap 150 µm) (NP EN ISO 2815) | GU | 4.1 | 4.7 | 3.6 |
| Water absorption | % | 33.2 | 39.3 | 26 |
| Wet scrub resistance (ISO 11998) | µm | 28.7 | 23.5 | 34 |
| (Film thickness loss) | class | 4 | 4 | 4 |

The data in Table 5 shows that IP 2 has a significantly increased yield compared to CP 2, and therefore has a better coverage than CP 2. Furthermore, the data for IP 3 shows that it is possible to reduce the TiO₂ content by 50%, while still obtaining a paint which has the same yield as CP 2 using the commercial GCC. Thus, the data in Table 5 shows that the inventive calcium carbonate-containing product improves the properties of a paint, e.g. the yield of a paint, and can be used to at least partially replace TiO₂ without negatively impacting the performance of the paint.

It is further to be noted that all inventive paints IP1 to IP3 show good overall properties (e.g. viscosity), which are at least comparable to the overall properties of comparative paints CP1 and CP2 made from a conventional GCC.

Table 6 shows the components of inventive paints IP4 to IP6 as well as for comparative paints CP3 to CP8.

**Table 6: PVC Paint formulation with high, medium, and low PVC and high, medium and low TiO₂ content**

| **Examples** | **CP3** | **IP4** | **CP6** | **CP4** | **IP5** | **CP7** | **CP5** | **IP6** | **CP8** |
|---|---|---|---|---|---|---|---|---|---|
| Additive | %(w/w) | %(w/w) | %(w/w) | %(w/w) | %(w/w) | %(w/w) | %(w/w) | %(w/w) | %(w/w) |
| Water | 14.5 | 13.3 | 26.9 | 19.3 | 18.3 | 19.4 | 16.7 | 16.0 | 13.7 |
| Calgon N New | | | | | | | 0.5 | 0.5 | 0.5 |
| Ecodis P 90 | 0.3 | 0.3 | 0.3 | 0.4 | 0.4 | 0.4 | 0.5 | 0.5 | 0.5 |
| Bermocoll Prime 3500 | 0.3 | 0.3 | 0.3 | 0.4 | 0.4 | 0.4 | 0.4 | 0.4 | 0.4 |
| NaOH, 10% | 0.2 | 0.2 | 0.2 | 0.2 | 0.2 | 0.2 | 0.2 | 0.2 | 0.2 |
| BYK 012 | | | | 0.2 | 0.2 | 0.2 | 0.2 | 0.2 | 0.2 |
| BYK 038 | 0.3 | 0.3 | 0.3 | | | | | | |
| Texanol | 0.3 | 0.3 | 0.3 | 0.6 | 0.6 | 0.6 | 1.0 | 1.0 | 1.0 |
| Mergal 723K | 0.1 | 0.1 | 0.1 | 0.1 | 0.1 | 0.1 | 0.1 | 0.1 | 0.1 |
| Coapur 2025 | 0.6 | 0.6 | 0.6 | 0.6 | 0.6 | 0.6 | 0.8 | 0.8 | 0.8 |
| Kronos 2310 (TiO₂) | 3.0 | 3.0 | 3.0 | 8.0 | 8.0 | 8.0 | 15.0 | 15.0 | 15.0 |
| Slurry GCC (GCC II) (72%) | **44.3** | | | **36.2** | | | **25.0** | | |
| Slurry of IE1 70% SC | | **45.5** | | | **37.2** | | | **25.7** | |
| Dry GCC (GCC III) | | | **31.9** | | | **26.1** | | | **18.0** |
| Omyacarb 5 GU | 18.0 | 18.0 | 18.0 | 12.0 | 12.0 | 12.0 | | | |
| Optimat 2550 | 2.0 | 2.0 | 2.0 | | | | | | |
| Finntalc SL20-AW | | | | | | | 7.0 | 7.0 | 7.0 |
| Omyamatt 100 ME | | | | 2.0 | 2.0 | 2.0 | 4.0 | 4.0 | 4.0 |
| BYK 012 | | | | 0.1 | 0.1 | 0.1 | 0.1 | 0.1 | 0.1 |
| BYK 038 | 0.1 | 0.1 | 0.1 | | | | | | |
| Mowilith LDM 6119 | 16.0 | 16.0 | 16.0 | | | | | | |
| Mowilith LDM 1871C | | | | 20.0 | 20.0 | 20.0 | | | |
| Mowilith LDM 2454 | | | | | | | 28.5 | 28.5 | 28.5 |
| | | | | | | | | | |
| **Total** | 100.0 | 100.0 | 100.0 | 100.0 | 100.0 | 100.0 | 100.0 | 100.0 | 100.0 |
| | | | | | | | | | |
| PVC | 77 | 77 | 77 | 64 | 64 | 64 | 54 | 54 | 54 |
| calculated solid content | 63 | 63 | 63 | 60 | 60 | 60 | 60 | 60 | 60 |

**Table 7a: Properties of comparative paints CP3 to CP7 and inventive paints IP4 and IP5**

| **Property** | | **Unit** | **CP3** | **IP4** | **CP6** | **CP4** | **IP5** | **CP7** |
|---|---|---|---|---|---|---|---|---|
| Solids content (NP ISO 2811-1) | | % | 63.0 | 63.0 | 63.0 | 60.0 | 60.0 | 60.0 |
| Theoretical PVC | | % | 77 | 77 | 77 | 64 | 64 | 64 |
| pH | | | 8.8 | 9.1 | 9.0 | 8.0 | 8.0 | 7.7 |
| Viscosity (Brookfield, spl 6, 10 rpm) | | cP | 3430 | 4260 | 2950 | 5670 | 6820 | 5350 |
| Viscosity (Brookfield, spl 6, 60 rpm) | | cP | 1210 | 1490 | 1080 | 1730 | 2030 | 1690 |
| Viscosity (Brookfield, spl 6, 100 rpm) | | cP | 970 | 1190 | 870 | 1340 | 1570 | 1310 |
| Viscosity KU | | | 104 | 110 | 98 | 113 | 119 | 108 |

| Lightness/Opacity/Sheen (Gap 150µm) | | | | | | | | |
|---|---|---|---|---|---|---|---|---|
| Ry at C2° | DIN 53 145 | % | 87.4 | 87.8 | 88.3 | 89.0 | 89.4 | 89.6 |
| Ry over black at C2° | DIN 53 145 | % | 76.3 | 78.5 | 78.7 | 79.8 | 81.8 | 81.4 |
| Yellowness Index | DIN 6167 | % | 4.7 | 4.9 | 3.3 | 3.6 | 3.7 | 2.4 |
| Contrast ratio | ISO 2814 | % | 87.3 | 89.4 | 89.2 | 89.7 | 91.5 | 90.9 |
| Gloss 85° | EN ISO 2813 | % | 1.8 | 1.7 | 2.4 | 1.4 | 1.3 | 1.6 |

| Contrast at -- m²/l | | | | | | | | |
|---|---|---|---|---|---|---|---|---|
| Contrast ratio at 7.5 m²/l | ISO 11198 | % | 92.0 | 93.4 | 93.4 | 92.9 | 94.4 | 94.2 |
| Contrast ratio class at 7.5 m²/l | EN 13300 | class | N/A | N/A | N/A | N/A | N/A | N/A |

| Mechanical Properties | | | | | | | | |
|---|---|---|---|---|---|---|---|---|
| WSR ISO 200c/40c/7d/40C | ISO 11998 | µm | 24 | 22 | 41 | 11 | 9 | 11 |
| WSR Error | | % | 68 | 22 | 40 | 3 | 11 | 6 |
| Wet scrub resistance Class. | EN 13300 | class | N/A | N/A | N/A | N/A | N/A | N/A |

**Table 7b: Properties of comparative paints CP5 and CP8 and inventive paint IP6**

| **Property** | | **Unit** | **CP5** | **IP6** | **CP8** |
|---|---|---|---|---|---|
| Solids content (NP ISO 2811-1) | | % | 60.0 | 60.0 | 60.0 |
| Theoretical PVC | | % | 54 | 54 | 54 |
| pH | | | 8.2 | 8.4 | 7.8 |
| Viscosity (Brookfield, spl 6, 10 rpm) | | cP | 7100 | 7590 | 6420 |
| Viscosity (Brookfield, spl 6, 60 rpm) | | cP | 2333 | 2530 | 2150 |
| Viscosity (Brookfield, spl 6, 100 rpm) | | cP | 1770 | 1930 | 1640 |
| Viscosity KU | | | N/A | N/A | N/A |

| Lightness/Opacity/Sheen (Gap 150µm) | | | | | |
|---|---|---|---|---|---|
| Ry at C2° | DIN 53 145 | % | 90.6 | 90.5 | 90.8 |
| Ry over black at C2° | DIN 53 145 | % | 85.7 | 85.7 | 86.1 |
| Yellowness Index | DIN 6167 | % | 2.4 | 2.6 | 1.9 |
| Contrast ratio | ISO 2814 | % | 94.6 | 94.7 | 94.4 |
| Gloss 85° | EN ISO 2813 | % | 1.8 | 1.7 | 1.9 |

| Contrast at -- m²/l | | | | | |
|---|---|---|---|---|---|
| Contrast ratio at 7.5 m²/l | ISO 11198 | % | 97.0 | 97.3 | 97.1 |
| Contrast ratio class at 7.5 m²/l | EN 13300 | class | N/A | N/A | N/A |

| Mechanical Properties | | | | | |
|---|---|---|---|---|---|
| WSR ISO 200c/40c/7d/40C | ISO 11998 | µm | 6 | 5 | 5 |
| WSR Error | | % | 12 | 17 | 2 |
| Wet scrub resistance Class. | EN 13300 | class | N/A | N/A | N/A |

The data in Tables 7a and 7b show that IP4 to IP6 have better or same contrast ratio at same TiO₂ content, and improved contrast ratio with increased TiO₂ content compared to CP3 to CP8, as well as improved gloss at 85°, which means a lower gloss effect at 85° is associated with a higher matting effect at 85°.

Table 8 shows the components of inventive paints IP7 and IP8 as well as for comparative paints CP9 and CP10.

**Table 8: Medium PVC paint formulation with high and medium TiO₂ content**

| **Examples** | **CP9** | **CP10** | **IP7** | **IP8** |
|---|---|---|---|---|
| Additive | % (w/w) | % (w/w) | % (w/w) | % (w/w) |
| Water | 22.70 | 20.20 | 21.50 | 18.70 |
| Calgon N New | 0.10 | 0.10 | 0.10 | 0.10 |
| Ecodis P 90 | 0.30 | 0.30 | 0.30 | 0.30 |
| Bermocoll Prime 3500 | 0.30 | 0.30 | 0.30 | 0.30 |
| NaOH, 10% | 0.20 | 0.20 | 0.20 | 0.20 |
| BYK 012 | 0.20 | 0.20 | 0.20 | 0.20 |
| Coapur 2025 | 0.50 | 0.50 | 0.50 | 0.50 |
| Kronos 2310 (TiO₂) | 13.0 | 6.5 | 13.0 | 6.5 |
| Slurry GCC (GCC II) 72% SC | 43.0 | 51.5 | | |
| Slurry of IE1 70% SC | | | 44.2 | 53.0 |
| Finntalc SL15-AW | 5.5 | 5.5 | 5.5 | 5.5 |
| Byk 012 | 0.1 | 0.1 | 0.1 | 0.1 |
| Mowilith LDM 1871 C | 14.0 | 14.5 | 14.0 | 14.5 |
| Mergal 723 K | 0.1 | 0.1 | 0.1 | 0.1 |
| | | | | |
| Total | 100.0 | 100.0 | 100.0 | 100.0 |
| | | | | |
| PVC | 72 | 72 | 72 | 72 |
| calculated solid content | 58 | 58 | 58 | 58 |

Table 9 shows properties of comparative paints CP9 and CP10 and inventive paints IP7 and IP8.

The optical properties were measured on the white part of a black/white card form Leneta, where a film of the paint was applied with a 150 micron applicator and dried for 24 hours.

**Table 9:**

| **Property** | | **Unit** | **CP9** | **CP10** | **IP7** | **IP8** |
|---|---|---|---|---|---|---|
| Solids content (NP ISO 2811-1) | | % | 58.4 | 58.5 | 58.3 | 58.6 |
| Theoretical PVC | | % | 72 | 72 | 72 | 72 |
| pH | | | 8.5 | 8.3 | 8.6 | 8.7 |
| Viscosity (Brookfield, spl 6, 10 rpm) | | cP | 3020 | 3520 | 4060 | 4610 |
| Viscosity (Brookfield, spl 6, 60 rpm) | | cP | 980 | 1090 | 1240 | 1320 |
| Viscosity (Brookfield, spl 6, 100 rpm) | | cP | 741 | 822 | 928 | 980 |
| Viscosity KU | | | 97.2 | 101.9 | 103.4 | 110.9 |

| Lightness/Opacity/Sheen (Gap 150µm) | | | | | | |
|---|---|---|---|---|---|---|
| Ry at C2° | DIN 53 145 | % | 90.2 | 88.9 | 90.8 | 89.6 |
| Ry over black at C2° | DIN 53 145 | % | 86.3 | 82.5 | 87.6 | 84.8 |
| Yellowness Index | DIN 6167 | | 3.1 | 3.8 | 3.4 | 4.2 |
| Contrast ratio | ISO 2814 | % | 95.6 | 92.8 | 96.5 | 94.6 |
| Gloss 85° | EN ISO 2813 | | 3.3 | 2.9 | 2.8 | 2.6 |

| Contrast at -- m2/l | | | | | | |
|---|---|---|---|---|---|---|
| Contrast ratio at 7.5 m²/l | ISO 11198 | % | 89.9 | 87.9 | 99.2 | 98.6 |
| Contrast ratio class at 7.5 m²/l | EN 13300 | class | 2 | 3 | 2 | 2 |

| Mechanical Properties | | | | | | |
|---|---|---|---|---|---|---|
| WSR ISO 200c/40c/7d/40C | ISO 11998 | µm | 10 | 16 | 27 | 12 |
| WSR Error | | % | 0.46 | 2.09 | 5.37 | 1.42 |
| Wet scrub resistance Class. | EN 13300 | class | 2 | 2 | 3 | 2 |

The data in Table 9 show that IP7 and IP8 have significant better contrast ratio at higher and lower TiO₂ content, compared to CP9 and CP10, as well as improved gloss at 85°, which means a lower gloss effect at 85° is associated with a higher matting effect at 85°.

## Claims

1. A calcium carbonate-containing material,
wherein the calcium carbonate-containing material is prepared from an avian eggshell,
wherein the calcium carbonate-containing material has a weight-median particle size *d*₅₀ of from 0.5 to 10 µm, and/or a weight top cut particle size *d*₉₈ of from 2.0 to 40 µm, and
wherein the calcium carbonate-containing material comprises organic matter in an amount of below 1.5 wt.%, based on the total dry weight of the calcium carbonate-containing material,
and wherein the calcium carbonate-containing material has
i) a brightness from 90 to 100%, according to R457, and/or
ii) L* from 95 to 100, according to DIN 6174.

2. The calcium carbonate-containing material according to claim 1, wherein the calcium carbonate-containing material has a weight-median particle size *d*₅₀ of from 1.0 to 7 µm, and preferably from 2.5 to 5 µm, and/or
wherein the calcium carbonate-containing material has a weight top cut particle size *d*₉₈ of from 5.0 to 35 µm, and preferably from 10 to 25 µm, and/or
wherein the calcium carbonate-containing material has a specific surface area of from 0.5 to 20 m²/g, preferably of from 1 to 15 m²/g, and more preferably of from 2 to 10 m²/g, measured using nitrogen and the BET method.

3. The calcium carbonate-containing material according to claim 1 or 2, wherein the calcium carbonate-containing material has
i) a brightness from 93 to 100%, according to R457, and/or
ii) L* from 98 to 100, according to DIN 6174, and/or
iii) b* from 0 to 10, preferably from 1 to 5, according to DIN 6174, and/or
iv) y from 0.5 to 5.

4. The calcium carbonate-containing material according to any of claims 1 to 3, wherein the calcium carbonate-containing material comprises organic matter in an amount of below 1.0 wt.%, preferably of below 0.5 wt.%, more preferably of below 0.1 wt.%, even more preferably of below 0.05 wt.%, based on the total dry weight of the calcium carbonate-containing material, and/or
wherein the calcium carbonate-containing material comprises calcium carbonate in an amount of from 96.0 to 99.9 wt.%, preferably from 97.0 to 99.0 wt.%, based on the total dry weight of the calcium carbonate-containing material.

5. The calcium carbonate-containing material according to any of claims 1 to 4, the calcium carbonate-containing material comprises intra-particle pores having a pore diameter of below 1000 nm, preferably having a pore diameter in a range of from 1 to 500 nm, more preferably in a range of between 5 to 300 nm, and most preferably in a range of 50 to 150 nm, as measured by scanning electron microscopy.

6. The calcium carbonate-containing material according to any of claims 1 to 5, wherein the calcium carbonate-containing material is prepared from chicken eggshell.

7. A process for preparing a calcium carbonate-containing material according to any one of claims 1 to 6, the process comprising the steps of:
a) providing a pre-treated avian eggshell, wherein the pre-treated avian eggshell is an avian eggshell in which the inner shell membrane has been removed,
b) grinding an aqueous suspension comprising the pre-treated avian eggshell of step a) to obtain an aqueous suspension comprising a ground avian eggshell having a weight-median particle size *d*₅₀ of from 0.5 to 10 µm, and/or a weight top cut particle size *d*₉₈ of from 2.0 to 40 µm,
c) treating the pre-treated avian eggshell during step b) with a base or treating the ground eggshell after step b) with a base,
d) optionally separating the ground avian eggshell from the aqueous suspension obtained in step b) or c),
e) treating the ground avian eggshell obtained in step c), or in optional step d), with a bleaching agent.

8. The process according to claim 7, wherein the pre-treated avian eggshell of step a) is a pre-treated eggshell of a chicken, and/or
wherein the base of step c) is a base selected from the group consisting of hydroxide salts, ammonia, PO₄³⁻ salts, CO₃²⁻ salts and mixtures thereof, preferably selected from the group consisting of hydroxide salts and mixtures thereof, and most preferably is sodium hydroxide.

9. The process according to claim 7 or 8, wherein the pre-treated avian eggshell is treated with the base during step b), and/or
wherein the process comprises step d) and the ground avian eggshell obtained in step d) is treated with a bleaching agent in step e).

10. The process according to any one of claims 7 to 9, wherein the grinding of step b) is carried out in the presence of a grinding medium, preferably selected from the group consisting of metallic grinding media and non-metallic grinding media, preferably ceramic grinding media, and/or
wherein the grinding of step b) is carried out in a ball mill, an attrition mill or a sand mill, preferably a sand mill.

11. The process according to any one of claims 7 to 10, wherein the bleaching agent in step d) is an oxidative bleaching agent, preferably selected from the group consisting of percarbonate salts, perborate salts, peroxy acids, hydrogen peroxide, hypochlorite salts and mixtures thereof, more preferably from the group consisting of hypochlorite salts and mixtures thereof, and most preferably is sodium hypochlorite, and/or
wherein the treatment of step e) is carried out at a temperature in the range of from 10 to 90°C, preferably from 20 to 80°C, and more preferably from 50 to 75°C.

12. A paint formulation comprising the calcium carbonate-containing material according to any of claims 1 to 6.

13. Use of a calcium carbonate-containing material according to any of claims 1 to 6 in a paint formulation.

14. The use according to claim 13, wherein the calcium carbonate-containing material is used for improving the optical properties of a paint formulation, more preferably for increasing the opacity, and/or coverage of a paint formulation.

15. The use according to claim 13 or 14, wherein the calcium carbonate-containing material is used for at least partially replacing a raw material in a paint formulation, preferably a filler and/or pigment, more preferably ground calcium carbonate (GCC) or titanium dioxide.

## Patentansprüche

1. Ein calciumcarbonathaltiges Material,
wobei das calciumcarbonathaltige Material aus einer Vogeleierschale hergestellt wird,
wobei das calciumcarbonathaltige Material eine gewichtsmittlere Partikelgröße *d*₅₀ von 0,5 bis 10 µm und/oder eine gewichtsobere Partikelgröße *d*₉₈ von 2,0 bis 40 µm aufweist, und
wobei das calciumcarbonathaltige Material organische Stoffe in einer Menge von weniger als 1,5 Gew.-%, bezogen auf das gesamte Trockengewicht des calciumcarbonathaltigen Materials, umfasst, und
wobei das calciumcarbonathaltige Material aufweist
i) eine Helligkeit von 90 bis 100 % gemäß R457 und/oder
ii) L* von 95 bis 100 gemäß DIN 6174.

2. Das calciumcarbonathaltige Material gemäß Anspruch 1, wobei das calciumcarbonathaltige Material eine gewichtsmittlere Partikelgröße *d*₅₀ von 1,0 bis 7 µm, vorzugsweise von 2,5 bis 5 µm, aufweist, und/oder
wobei das calciumcarbonathaltige Material eine gewichtsobere Partikelgröße *d*₉₈ von 5,0 bis 35 µm, vorzugsweise von 10 bis 25 µm, aufweist, und/oder
wobei das calciumcarbonathaltige Material eine spezifische Oberfläche von 0,5 bis 20 m²/g, vorzugsweise von 1 bis 15 m²/g und noch bevorzugter von 2 bis 10 m²/g aufweist, gemessen unter Verwendung von Stickstoff und nach der BET-Methode.

3. Das calciumcarbonathaltige Material gemäß Anspruch 1 oder 2, wobei das calciumcarbonathaltige Material aufweist
i) eine Helligkeit von 93 bis 100 % gemäß R457 und/oder
ii) L* von 98 bis 100 gemäß DIN 6174 und/oder
iii) b* von 0 bis 10, vorzugsweise von 1 bis 5, gemäß DIN 6174, und/oder
iv) y von 0,5 bis 5.

4. Das calciumcarbonathaltige Material gemäß einem der Ansprüche 1 bis 3, wobei das calciumcarbonathaltige Material organische Stoffe in einer Menge von weniger als 1,0 Gew.-%, vorzugsweise weniger als 0,5 Gew.-%, noch bevorzugter weniger als 0,1 Gew.-%, noch mehr bevorzugt weniger als 0,05 Gew.-%, umfasst, bezogen auf das gesamte Trockengewicht des calciumcarbonathaltigen Materials, und/oder
wobei das calciumcarbonathaltige Material Calciumcarbonat in einer Menge von 96,0 bis 99,9 Gew.-%, vorzugsweise von 97,0 bis 99,0 Gew.-%, bezogen auf das gesamte Trockengewicht des calciumcarbonathaltigen Materials, umfasst.

5. Das calciumcarbonathaltige Material gemäß einem der Ansprüche 1 bis 4, wobei das calciumcarbonathaltige Material intrapartikuläre Poren mit einem Porendurchmesser von weniger als 1000 nm, vorzugsweise mit einem Porendurchmesser im Bereich von 1 bis 500 nm, noch bevorzugter im Bereich von 5 bis 300 nm, und am bevorzugtesten im Bereich von 50 bis 150 nm, umfasst, gemessen mittels Rasterelektronenmikroskopie.

6. Das calciumcarbonathaltige Material gemäß einem der Ansprüche 1 bis 5, wobei das calciumcarbonathaltige Material aus Hühnereischalen hergestellt wird.

7. Ein Verfahren zur Herstellung eines calciumcarbonathaltigen Materials gemäß einem der Ansprüche 1 bis 6, wobei das Verfahren die folgenden Schritte umfasst:
a) Bereitstellen einer vorbehandelten Vogeleierschale, wobei die vorbehandelte Vogeleierschale eine Vogeleierschale ist, bei der die innere Schalenmembran entfernt wurde,
b) Mahlen einer wässrigen Suspension, die die vorbehandelte Vogeleierschale aus Schritt a) umfasst, um eine wässrige Suspension zu erhalten, die eine gemahlene Vogeleierschale mit einer gewichtsmittleren Partikelgröße *d*₅₀ von 0,5 bis 10 µm und/oder einer gewichtsoberen Partikelgröße *d*₉₈ von 2,0 bis 40 µm umfasst,
c) Behandeln der vorbehandelten Vogeleierschale während Schritt b) mit einer Base oder Behandeln der gemahlenen Vogeleierschale nach Schritt b) mit einer Base,
d) gegebenenfalls Trennen der gemahlenen Vogeleierschalen von der in Schritt b) oder c) erhaltenen wässrigen Suspension,
e) Behandeln der in Schritt c) oder im optionalen Schritt d) erhaltenen gemahlenen Vogeleierschalen mit einem Bleichmittel.

8. Das Verfahren nach Anspruch 7, wobei die vorbehandelte Vogeleierschale aus Schritt a) eine vorbehandelte Hühnereierschale ist, und/oder
wobei die Base aus Schritt c) eine Base ist, die aus der Gruppe ausgewählt ist, die aus Hydroxidsalzen, Ammoniak, PO₄³⁻ -Salzen, CO₃²⁻ -Salzen und Mischungen davon besteht, vorzugsweise aus der Gruppe ausgewählt ist, die aus Hydroxidsalzen und Mischungen davon besteht, und am bevorzugtesten Natriumhydroxid ist.

9. Das Verfahren nach Anspruch 7 oder 8, wobei die vorbehandelte Vogeleierschale während Schritt b) mit der Base behandelt wird und/oder
wobei das Verfahren Schritt d) umfasst und die in Schritt d) erhaltene gemahlene Vogeleierschale in Schritt e) mit einem Bleichmittel behandelt wird.

10. Das Verfahren nach einem der Ansprüche 7 bis 9, wobei das Mahlen in Schritt b) in Gegenwart eines Mahlmediums durchgeführt wird, das vorzugsweise aus der Gruppe ausgewählt ist, die aus metallischen Mahlmedien und nichtmetallischen Mahlmedien, vorzugsweise keramischen Mahlmedien, besteht, und/oder
wobei das Mahlen in Schritt b) in einer Kugelmühle, einer Reibmühle oder einer Sandmühle, vorzugsweise einer Sandmühle, durchgeführt wird.

11. Das Verfahren nach einem der Ansprüche 7 bis 10, wobei das Bleichmittel in Schritt d) ein oxidatives Bleichmittel ist, vorzugsweise ausgewählt aus der Gruppe bestehend aus Percarbonatsalzen, Perboratsalzen, Peroxysäuren, Wasserstoffperoxid, Hypochloritsalzen und Mischungen davon, noch bevorzugter aus der Gruppe bestehend aus Hypochloritsalzen und Mischungen davon, und am meisten bevorzugt Natriumhypochlorit ist, und/oder
wobei die Behandlung in Schritt e) bei einer Temperatur im Bereich von 10 bis 90 °C, vorzugsweise von 20 bis 80 °C und noch bevorzugter von 50 bis 75 °C durchgeführt wird.

12. Eine Farbformulierung, die das calciumcarbonathaltige Material gemäß einem der Ansprüche 1 bis 6 umfasst.

13. Verwendung eines calciumcarbonathaltigen Materials gemäß einem der Ansprüche 1 bis 6 in einer Farbformulierung.

14. Die Verwendung gemäß Anspruch 13, wobei das calciumcarbonathaltige Material zur Verbesserung der optischen Eigenschaften einer Farbformulierung, vorzugsweise zur Erhöhung der Opazität und/oder Deckkraft einer Farbformulierung, verwendet wird.

15. Die Verwendung gemäß Anspruch 13 oder 14, wobei das calciumcarbonathaltige Material zum zumindest teilweisen Ersetzen eines Rohstoffs in einer Farbformulierung verwendet wird, vorzugsweise eines Füllstoffs und/oder Pigments, insbesondere gemahlenes Calciumcarbonat (GCC) oder Titandioxid.

## Revendications

1. Matériau contenant du carbonate de calcium,
dans lequel le matériau contenant du carbonate de calcium est préparé à partir d'une coquille d'œuf aviaire,
dans lequel le matériau contenant du carbonate de calcium a une taille de particule médiane en poids *d₅₀* de 0,5 à 10 µm, et/ou une taille de particule de coupe supérieure en poids *d₉₈* de 2,0 à 40 µm, et
dans lequel le matériau contenant du carbonate de calcium comprend une matière organique en une quantité inférieure à 1,5 % en poids, en se basant sur le poids sec total du matériau contenant du carbonate de calcium, et dans lequel le matériau contenant du carbonate de calcium a
i) une luminosité de 90 à 100 %, selon la norme R457, et/ou
ii) L* de 95 à 100, selon la norme DIN 6174.

2. Matériau contenant du carbonate de calcium selon la revendication 1, dans lequel le matériau contenant du carbonate de calcium a une taille de particule médiane en poids *d₅₀* de 1,0 à 7 µm, et de préférence de 2,5 à 5 µm, et/ou
dans lequel le matériau contenant du carbonate de calcium a une taille de particule de coupe supérieure en poids *d₉₈* de 5,0 à 35 µm, et de préférence de 10 à 25 µm, et/ou
dans lequel le matériau contenant du carbonate de calcium a une surface spécifique de 0,5 à 20 m²/g, de préférence de 1 à 15 m²/g, et plus préférablement de 2 à 10 m²/g, mesurée en utilisant de l'azote et la méthode BET.

3. Matériau contenant du carbonate de calcium selon la revendication 1 ou 2, dans lequel le matériau contenant du carbonate de calcium a
i) une luminosité de 93 à 100 %, selon la norme R457, et/ou
ii) L* de 98 à 100, selon la norme DIN 6174, et/ou
iii) b* de 0 à 10, de préférence de 1 à 5, selon la norme DIN 6174, et/ou
iv) y de 0,5 à 5.

4. Matériau contenant du carbonate de calcium selon l'une quelconque des revendications 1 à 3, dans lequel le matériau contenant du carbonate de calcium comprend une matière organique en une quantité inférieure à 1,0 % en poids, de préférence inférieure à 0,5 % en poids, plus préférablement inférieure à 0,1 % en poids, encore plus préférablement inférieure à 0,05 % en poids, en se basant sur le poids sec total du matériau contenant du carbonate de calcium, et/ou
dans lequel le matériau contenant du carbonate de calcium comprend du carbonate de calcium en une quantité de 96,0 à 99,9 % en poids, de préférence de 97,0 à 99,0 % en poids, en se basant sur le poids sec total du matériau de contenant du carbonate de calcium.

5. Matériau contenant du carbonate de calcium selon l'une quelconque des revendications 1 à 4, dans lequel le matériau contenant du carbonate de calcium comprend des pores intra-particulaires ayant un diamètre de pore inférieur à 1000 nm, de préférence ayant un diamètre de pore dans la plage allant de 1 à 500 nm, plus préférablement dans la plage allant de 5 à 300 nm, et de manière préférée entre toutes dans la plage de 50 à 150 nm, comme mesuré par microscopie électronique à balayage.

6. Matériau contenant du carbonate de calcium selon l'une quelconque des revendications 1 à 5, dans lequel le matériau contenant du carbonate de calcium est préparé à partir d'une coquille d'œuf de poule.

7. Procédé de préparation d'un matériau contenant du carbonate de calcium selon l'une quelconque des revendications 1 à 6, le procédé comprenant les étapes consistant à :
a) fournir une coquille d'œuf aviaire prétraitée, dans lequel la coquille d'œuf aviaire prétraitée est une coquille d'œuf aviaire dans laquelle la membrane de la coquille interne a été retirée,
b) broyer une suspension aqueuse comprenant la coquille d'œuf aviaire prétraitée de l'étape a) pour obtenir une suspension aqueuse comprenant une coquille d'œuf aviaire broyée ayant une taille de particule médiane en poids *d₅₀* de 0,5 à 10 µm, et/ou une taille de particule de coupe supérieure en poids *d₉₈* de 2,0 à 40 µm,
c) traiter la coquille d'œuf aviaire prétraitée pendant l'étape b) avec une base ou traiter la coquille d'œuf broyée après l'étape b) avec une base,
d) éventuellement séparer la coquille d'œuf aviaire broyée de la suspension aqueuse obtenue à l'étape b) ou c),
e) traiter la coquille d'œuf aviaire broyée obtenue à l'étape c), ou à l'étape d) éventuelle, avec un agent de blanchiment.

8. Procédé selon la revendication 7, dans lequel la coquille d'œuf aviaire prétraitée de l'étape a) est une coquille d'œuf prétraitée d'une poule, et/ou
dans lequel la base de l'étape c) est une base choisie dans le groupe constitué par les sels d'hydroxyde, les sels de PO₄³⁻, les sels de CO₃²⁻ et des mélanges de ceux-ci, de préférence choisie dans le groupe constitué par les sels d'hydroxyde et des mélanges de ceux-ci, et de manière préférée entre toutes est l'hydroxyde de sodium.

9. Procédé selon la revendication 7 ou 8, dans lequel la coquille d'œuf aviaire prétraitée est traitée avec la base pendant l'étape b), et/ou
dans lequel le procédé comprend l'étape d) et la coquille d'œuf aviaire broyée obtenue à l'étape d) est traitée avec un agent de blanchiment à l'étape e).

10. Procédé selon l'une quelconque des revendications 7 à 9, dans lequel le broyage de l'étape b) est réalisé en présence d'un support de broyage, de préférence choisi dans le groupe constitué par un support de broyage métallique et un support de broyage non métallique, de préférence un support de broyage en céramique, et/ou
dans lequel le broyage de l'étape b) est réalisé dans un broyeur à boulets, un broyeur par attrition ou un broyeur à sable, de préférence un broyeur à sable.

11. Procédé selon l'une quelconque des revendications 7 à 10, dans lequel l'agent de blanchiment de l'étape d) est un agent de blanchiment oxydant, de préférence choisi dans le groupe constitué par les sels de percarbonate, les sels de perborate, les acides peroxydés, le peroxyde d'hydrogène, les sels de chlorhydrate et des mélanges de ceux-ci, plus préférablement dans le groupe constitué par les sels de chlorhydrate et des mélanges de ceux-ci, et de manière préférée entre toutes est le chlorhydrate de sodium, et/ou
dans lequel le traitement de l'étape e) est réalisé à une température comprise dans la plage allant de 10 à 90 °C, de préférence de 20 à 80 °C, et plus préférablement de 50 à 75 °C.

12. Formulation de peinture comprenant le matériau contenant du carbonate de calcium selon l'une quelconque des revendications 1 à 6.

13. Utilisation d'un matériau contenant du carbonate de calcium selon l'une quelconque des revendications 1 à 6 dans une formulation de peinture.

14. Utilisation selon la revendication 13, dans laquelle le matériau contenant du carbonate de calcium est utilisé pour améliorer les propriétés optiques d'une formulation de peinture, plus préférablement pour augmenter l'opacité et/ou la couvrance d'une formulation de peinture.

15. Utilisation selon la revendication 13 ou 14, dans laquelle le matériau contenant du carbonate de calcium est utilisé pour remplacer au moins partiellement une matière de départ d'une formulation de peinture, de préférence une charge et/ou un pigment, plus préférablement le carbonate de calcium broyé (GCC) ou le dioxyde de titane.
